# EUROPÄISCHE PATENTSCHRIFT

(11) **EP 0 554 919 B1**
(45) Veröffentlichungstag und Bekanntmachung des Hinweises auf die Patenterteilung: **21.06.1995**
(21) Anmeldenummer: 93104880.5
(22) Anmeldetag: 29.01.1991
(51) Int. Cl.: B60R 21/26

(54) **Verfahren zum Aufblasen eines Gaskissens und Sicherheitssystem vom Airbag-Typ**
Airbag inflating method and safety system of airbag type
Procédé de gonflage d'un coussin d'air et système de sécurité du type coussin d'air

(30) Priorität: 30.01.1990 DE 4002662
(43) Veröffentlichungstag der Anmeldung: 11.08.1993
(62) Teilanmeldung aus: 91903650.9
(73) Patentinhaber: KS AUTOMOBIL-SICHERHEITSTECHNIK GmbH, D-63743 Aschaffenburg (DE)
(72) Erfinder: Ketterer, Dieter, W-7238 Oberndorf/Neckar (DE); Fritz, Raimund, W-7218 Trossingen (DE); Seeger, Heinz, W-7294 Schopfloch (DE); Conzelmann, Ralf, W-7238 Oberndorf/Neckar (DE); Schumacher, Michael, W-7238 Oberndorf/Neckar (DE); Möller, Tilo, W-7238 Oberndorf/Neckar (DE)
(74) Vertreter: Rieger, Harald, Dr.

(56) Entgegenhaltungen:
- DE-A- 2 300 577
- DE-A- 2 323 231
- DE-A- 2 339 605
- DE-A- 2 348 834
- DE-A- 2 348 835
- DE-A- 2 406 645
- DE-A- 2 420 411
- US-A- 4 131 300
- US-A- 4 275 901

## Beschreibung

Die Erfindung bezieht sich auf ein Verfahren zum schnellen Aufblasen wenigstens eines Gaskissens in einem Sicherheitssystem vom Airbag-Typ, bei welchem ein erstes Druckgas oder Druckgasgemisch in einem ersten Speicher und - davon abgeschirmt - in einem zweiten Speicher ein im Bedarfsfall zündbarer Treibsatz zur Erzeugung eines Treibgases gespeichert werden. Im Bedarfsfall, also beispielsweise bei einem crash-charakteristischen Signal, werden die Gase aus ihren Speichern freigelassen und zusammengeführt. Sie blasen sodann das Gaskissen auf; füllen es also, weshalb sie auch Füllgase genannt werden (Gattung des Patentanspruches 1).

Die Erfindung bezieht sich auch auf ein Sicherheitssystem mit einem im Bedarfsfall, beispielsweise dem vorgenannten Crash-Fall, schnell aufblasbaren Gaskissen vom Airbag-Typ, insbesondere zur Durchführung des vorgenannten Verfahrens. Dabei weist das Sicherheitssystem wenigstens zwei Druckbehälter auf, nämlich einen zur Speicherung eines ersten Druckgases oder Druckgasgemisches ausgelegten ersten Druckbehälter und einen zur Speicherung eines im Bedarfsfall zündbaren und danach ein Treibgas erzeugenden Treibsatzes ausgelegten zweiten Druckbehälter. Zusätzlich sind im Crashfall aufsprengbare Gasauslässe zur Freigabe und Zusammenführung der Gase vorgesehen. Mit den freigelassenen Gasen wird dann das Gaskissen aufgeblasen, d.h. gefüllt, weshalb diese Gase auch Füllgase genannt werden (Gattung des Patentanspruches 10).

Sicherheitssysteme vom Airbag-Typ sind allgemein und auch im Rahmen vorliegender Erfindung, für aufblasbare Schwimmwesten, Rettungsbote, Signalballons odgl. verwendbar. Sie sind insbesondere als sogenannte passive Sicherheitssysteme für Kraftfahrzeuge bekannt, beispielsweise aus der DE-C-21 18 817 sowie den DE-A-21 18 816, 21 31 902, 21 43 165, 21 43 166 und 22 37 461 der Anmelderin.

Ein Gaskissen, auch Airbag genannt, ist allgemein ausgedrückt eine flexible, etwa sackartige Hülle, die bei Bedarf in kürzester Zeit aufgeblasen werden kann. In Kraftfahrzeugen soll ein Airbag-Sicherheitssystem das Gaskissen bei einem Unfall in kürzester Zeit aufblasen und das aufgeblasene Gaskissen zwischen den Fahrzeuglenker und das Lenkrad (Fahrersystem) oder zwischen einen Fahrgast und das Armaturenbrett oder andere Teile der Karrosserie bringen (Beifahrersystem). Hierdurch sollen die Insassen des Fahrzeuges bei einem Unfall weich aufgefangen werden. Eine wesentliche Bedingung derartiger Sicherheitssystems besteht darin, daß das Gaskissen schnell, beispielsweise innerhalb 30 ms aufgeblasen werden muß. Nach dem Aufblasen entleert sich das Gaskissen regelmäßig wieder in den Fahrgastraum.

Bekannt sind Sicherheitssysteme, die ausschließlich mit sogenannten Feststoffgeneratoren arbeiten. Bei diesen wird eine pyrotechnische Ladung, beispielsweise Natriumazid (NaN₃) gezündet und brennt dann rasch unter Entwicklung von Verbrennungsgasen ab. Die Verbrennungsgase, auch Generatorgas genannt, haben eine Temperatur von ca. 1200°C. Mit ihnen wird das Gaskissen aufgeblasen.

Reine Feststoffgenerator-Systeme haben Nachteile. Die heißen Verbrennungsgase bedingen nämlich eine besondere Ausgestaltung des Gaskissens, damit dieses den hohen Temperaturen standhalten kann. Hierfür ist das Gaskissen an seiner Innenseite mit einer temperaturbeständigen Gummibeschichtung versehen, die es vor thermischer Zerstörung schützen soll. Außerdem wirkt die Gummibeschichtung als Isolierschicht, welche Verbrennungen der vom Gaskissen aufgefangenen Person verhindern soll. Um die Gummibeschichtung des Gaskissens über eine lange Zeit geschmeidig und funktionsfähig zu halten, ist deren Oberfläche mit Talkum eingepudert. Bei einem Aufblasen des Gaskissens wird das Talkum aufgewirbelt und tritt bei Entleerung des Gaskissens zusammen mit den heißen Verbrennungsgasen in den Fahrgastraum aus. Dies hat zur Folge, daß der Fahrer in der Sicht behindert wird. Hierdurch kann es zu einem sogenannten Sekundär-Crash kommen.

Ein wesentlicher weiterer Nachteil von Feststoffgenerator-Systemen liegt darin, daß die pyrotechnische Ladung nur zu 60 bis 70 % verbrennt. Der nichtverbrannte Rest wird mit den Verbrennungsgasen aus dem Feststoffgenerator ausgestoßen. Er enthält nicht nur einen hohen Anteil giftiger Stoffe, etwa Stickoxide, Kohlenmonoxid und dgl. Die unverbrannten Teile der Natriumazidladung bilden mit Wasser oder Körperflüssigkeit ebenfalls giftige Stoffe, beispielsweise Blausäure (HCN). Das Gaskissen entleert diese Gase bzw. Reaktionsprodukte in den Fahrgastraum. Dies kann dazu führen, daß die im Kraftfahrzeug befindlichen Personen zwar den Unfall überleben, nicht aber die vorgenannten Folgeerscheinungen.

Schließlich stellt die Entsorgung des nicht verbrannten Natriumazid-Anteiles erhebliche Probleme dar. Diese Substanz und deren Reaktionsprodukte sind giftig und können sogar als Sprengstoff verwendet werden. Es besteht also die Gefahr einer mißbräuchlichen Weiterbenutzung der unverbrannten Natriumazid-Anteile. Werden pro Kraftfahrzeug ca. 300 g benötigt (100 g Fahrer, 200 g Beifahrer), so ergeben sich - bei einer geschätzten Anzahl von 100 Mio Kraftfahrzeugen - ca 30 Mio kg (30 000 Tonnen) giftiges, als Sprengstoff verwendbares Natriumazid. Bei einer durchschnittlichen Lebensdauer von ca. 8 Jahren pro Wagen müßten jedes Jahr etwa 3 750 Tonnen Natriumazid entsorgt und rückgeführt werden.

Um diese Nachteile zu vermeiden, ist versucht worden, den Feststoffgenerator durch einen Druckgasbehälter zu ersetzen, der das den Airbag aufblasende Gas als Druckgas speichert. Derartige Druckgasgeneratoren sind in den vorgenannten Druckschriften der Anmelderin beschrieben. Zur Vereinfachung kann auf diese Bezug genommen werden.

Ein Problem der Druckgasgeneratoren besteht darin, daß sich das Druckgas beim Öffnen des Druckgasbehälters plötzlich stark entspannt und hierdurch auf ca. minus 50°C und mehr abkühlen kann. Hierdurch kann im Gas etwa enthaltene Feuchtigkeit auskondensieren. Wird beim Aufblasen des Gaskissens Fremdluft angesaugt, kann zusätzlich auch noch die in der Fremdluft enthaltene Feuchtigkeit auskondensieren. Bei ungünstigen Außentemperaturen kann es dann zu Nebelbildungen im Fahrgastraum kommen. Die schlagartige Absenkung der Druckgastemperatur kühlt auch das Gaskissen selbst stark ab und reduziert auch das Volumen des entspannten Gases. Deshalb muß das Volumen des komprimierten Druckgases entsprechend groß gewählt werden, was zu großen Druckbehältern führt.

Hierdurch ergeben sich erhebliche bauliche Probleme.

Bekanntlich versucht man, die Probleme der GeneratorgasSicherheitssysteme und die der Druckgas-Sicherheitssysteme durch sogenannte Hybridsysteme in den Griff zu bekommen. Ein derartiges System ist aus der US-A- 4 131 300 bzw. der hierzu korrespondierenden DE-A-24 31 686 A1 bekannt, wovon auch die Gattungsteile der Patentansprüche 1 und 10 ausgehen. Bei dem bekannten System umgibt eine etwa torusförmige Druckgaskammer eine im Zentralloch des Torus angeordnete Treibsatzkammer. Die Druckgaskammer und die Treibsatzkammer sind durch eine Berstmembran voneinander getrennt. Nach Erhalt eines crash-charakteristischen Signals wird zunächst diese Berstmembran aufgesprengt. Das Treibgas tritt dann in die Druckgaskammer ein und vermischt sich dort mit dem Druckgas zu einem Hybridgas. Dieses sprengt schließlich nach ausreichender Erhitzung und Druckerhöhung eine den Druckgasbehälter nach außen abschirmende zweite Berstmembran und strömt dann durch einen Diffusor in das Gaskissen. Die genannte Druckschrift erwähnt auch folgende Möglichkeit: die Strömungsgeschwindigkeit des Treibgases könne durch eine kleine Öffnung in der ersten Berstmembran erhöht werden. Hierdurch erhalte das Treibgas eine bessere Richtwirkung. Stets muß aber das Treibgas durch den Druckgasbehälter strömen und sich mit dem Druckgas zu einem Hybridgas vermischen, bevor es die zweite Berstmembran aufbricht. Druckspitzen des Treibgases werden somit unmittelbar auf den Druckgasbehälter übertragen. Er muß also entsprechend druckstabil ausgelegt sein. Außerdem kann es innerhalb des Druckgasbehälters zu unerwünschten Wechselwirkungen zwischen dem Druckgas und dem Treibgas kommen.

Die DE-A-23 48 834 zeigt ebenfalls ein Hybridsystem zum Aufblasen eines Gaskissens. In diesem Hybridsystem werden in bekannter Weise der Druck, die Temperatur und die Strömungsgeschwindigkeit eines gespeicherten Druckgases durch Wärmezufuhr erhöht. Wärmelieferant sind zwei gegen das Druckgas abgeschirmte Treibsätze samt deren Zündpillen. Diese werden je nach Unfallsituation, gleichzeitig oder zeitlich versetzt gezündet. Die hierdurch erzeugten Treibgase strömen stets in den Druckgasbehälter, vereinigen sich dort mit dem Druckgas zu einem Hybridgas, das einen weiteren Berstverschluß aufsprengt und schließlich in das Gaskissen strömt. Auch hier treten die gleichen Probleme auf, wie bei der US-A-4 131 300.

Aus der DE-A-24 06 645 ist ein weiteres (zweistufiges) Hybridsystem bekannt, bei dem eine Berstmembran die Treibgaskammer gegen eine Druckgaskammer abschirmt. Eine weitere Berstmembran schirmt die Druckgaskammer vom Diffusor ab. Beide Berstmembranen sind über eine bewegliche Stange miteinander verbunden. Bei Erhalt eines crash-charakteristischen Signales schiebt die Berstmembran der Treibsatzkammer die Stange gegen die Berstmembran des Druckgasbehälters und sprengt diese auf. Auch hier strömt das Treibgas zunächst in den Druckgasbehälter, vermischt sich mit dem Druckgas zu einem Hybridgas und gelangt schließlich über einen Diffusor in das Gaskissen. Im übrigen lehrt diese Druckschrift, den Druck in der Treibgaskammer durch Verkleinerung des Treibgaskammerauslasses zu erhöhen.

Die DE-A-23 39 605 beschreibt sowohl ein Hybridsystem als auch ein reines Druckgassystem. Beim Hybridsystem strömen zunächst die Treibgase in das Gaskissen. Ihnen folgt das Druckgas aus dem Druckgasbehälter. Bei dem reinen Druckgassystem sind zwei Druckgaskammern in Strömungsrichtung hintereinander angeordnet und über eine Zwischenwand voneinander getrennt. Die Zwischenwand weist jedoch eine kleine Öffnung auf, so daß die beiden Kammern stets strömungsmäßige Verbindung haben. Die Zwischenwand ist zusätzlich als Berstscheibe ausgebildet. Bei einem Crash-Signal strömt zunächst Druckgas unbehindert aus der vorderen Druckgaskammer aus. Hierdurch entsteht ein Druckgefälle zu beiden Seiten der Zwischenwand. Erreicht das Druckgefälle einen vorgeschriebenen Wert, bricht die Zwischenwand ein, birst also.

Weitere Hybridsysteme sind aus den DE-A-23 23 231, 23 00 577 und 24 20 411 bekannt. Stets strömt das Treibgas durch den Druckgasbehälter. Dieser muß also die Druckspitzen des Treibgases auffangen können.

Die US-A-4 275 901 (OKADA) wendet sich von Hybridsystemen ab und beschreibt ein Sicherheitssystem vom Airbag-Typ mit zwei mit Druckgas gefüllten Hochdruck-Gasspeichern, die jeweils mit einer eigenen Berstscheibe versehen sind und jeweils in einen eigenen Auslaßkanal münden. Von dort gelangen die beiden Druckgasströme über Öffnungen in die Lenksäule eines Fahrzeuges und schließlich weiter in einen Airbag. Um den Airbag gleichmäßig aufblasen zu können, wird ein als Steuerteil wirkender längsbeweglicher Kolben mit einer Drosselöffnung verwendet. Dabei verschließt der Kolben eine größere Strömungsöffnung zu Beginn der Gasströmung in den Airbag. Die Steuerung soll derart erfolgen, daß die Gasströme am Ort ihrer Zusammenführung gleichzeitig eintreffen.

Ausgehend von diesem Stand der Technik befaßt sich die Erfindung mit dem Problem, das eingangs genannte Verfahren der im Gattungsteil des Patentanspruches 1 angegebenen Art und das eingangs genannte Sicherheitssystem der im Gattungsteil des Patentanspruches 10 angegebenen Art weiterzuentwickeln, insbesondere derart, daß zumindest einige der geschilderten Nachteile vermieden, mindestens aber deren Auswirkungen reduziert werden können.

Verfahrensmäßig wird dieses Problem durch den gesamten Gegenstand des Patentanspruchs 1 gelöst, insbesondere dadurch, daß der Druckverlauf des Treibgases im Treibsatzspeicher (Druckanstieg nach Zündung und/oder anschließender Druckabfall) durch Steuerung des Ausströmens des Treibgases aus dem Treibsatzspeicher gesteuert wird (Kennzeichen des Patentanspruches 1).

Auch das Sicherheitssystem des Patentanspruches 10 löst das vorgenannte Problem, insbesondere durch dessen Merkmale, daß Steuermittel zur Steuerung des Treibgas-Druckverlaufes im Treibgasbehälter (Druckanstieg nach Zündung und/oder anschließender Druckabfall) und/oder zur Steuerung des Zeitintervalls zwischen dem Freisprengen der Gasauslässe und dem Austritt des Treibgases aus dem Treibgasbehälter vorgesehen sind; und die Steuermittel ein zwischen dem Treibsatz und dem Ort des Gasaustrittes aus dem Treibsatzbehälter angeordnetes Drosselelement zur Steuerung des Ausströmens des Treibgases aufweisen (Kennzeichen des Patentanspruches 10).

Die Erfindungsgegenstände haben alle Vorzüge von Hybridsystemen, ohne gleichzeitig auch all deren Nachteile aufzuweisen.

Die gegenseitige Abschirmung der beiden Gas- bzw. Füllgasbehälter in Verbindung mit den übrigen Merkmalen der Patentansprüche 1 und 10 ermöglicht eine optimale gegenseitige Anpassung der beiden Füllmedien, insbesondere zur Erzielung gewünschter Füllparameter. Hierdurch können gewünschte Temperaturen und gewünschte Druck- und Volumenverhältnisse des Treibgases im Treibgasspeicher und des in das Gaskissen einströmenden Hybridgases erreicht werden. Gleichzeitig kann hierdurch auch dafür gesorgt werden, daß das Gaskissen zu Beginn des Aufblasvorganges nicht wie eine schmale Keule gegen den Fahrgast geschleudert wird, sondern von Anfang an gleichmäßig breitflächig aufgeblasen wird. Die wechselseitige Anpassung der Füllmedien kann durch Wahl geeigneter unterschiedlicher chemischen Zusammensetzungen der Füllmedien erzielt werden; aber auch dadurch, daß das Druckgas und das Treibgas zeitlich versetzt in das Gaskissen geblasen werden.

Die Steuerung des Druckverlaufs des Treibgases im Treibsatzspeicher, etwa des Druckanstiegs des Treibgases nach Zündung und/oder des sich daran anschließenden Druckabfalles, insbesondere in Richtung möglichst gleichmäßiger Druckverhältnisse am Ort der Zusammenführung der beiden Füllgasströme, ermöglicht ein gleichmäßiges Aufblasen des Gaskissens und schont hierdurch das Gaskissen, vor allem aber die vom Gaskissen aufgefangene Person. Die Mittel zur Steuerung des Druckverlaufes des Treibgases können auch Mittel zur Steuerung des Zeitintervalles zwischen dem Aufsprengen des Gasauslaßverschlusses und dem Austritt des Treibgases aus dem Treibgasbehälter umfassen. Die in den Patentansprüchen 1 und 10 angegebenen Mmaßnahmen sind auch dann mit Erfolg einsetzbar, wenn die Füllgase nicht erst außerhalb ihrer Füllgasbehälter zusammentreffen, sondern bereits vorher. Besonders bevorzugt werden diese Maßnahmen jedoch bei einem Verfahren und einer Vorrichtung nach den Patentansprüchen 5 oder 17 eingesetzt. Nach den letztgenannten Patentansprüchen treffen die zur Füllung des Airbag dienenden Gase, ein Treibgas und ein Druckgas, erst außerhalb ihrer Speicherräume aufeinander. Der Druckgasbehälter muß also nicht die Druckspitzen des Treibgases auffangen.

Als Mittel zur Steuerung des Treibggas-Druckverlaufes und/oder zur Steuerung des Zeitintervalls zwischen dem Freisprengen des Gasauslaßverschlusses und dem Austritt des Treibgases aus dem Treibgasbehälter wird ein Drosselelement eingesetzt, das zwischen dem Treibsatz und dem Ort des Gasaustrittes aus dem Treibsatzbehälter angeordnet ist. Ohne die erfindungsgemäße Treib- bzw. Heizgassteuerung würde der Druck in der Treib- bzw. Heizladungskammer unmittelbar nach dem Freisprengen des Treibgasauslasses schlagartig abfallen und der Abbrand der Treibladung, d.h. die Umsetzung der darin enthaltenen chemischen Substanzen würde unterbrochen. Hierdurch entstünde ein Brennschluß, und zwar unabhängig von der vorhandenen Heizladungsmenge. Unverbrannte Partikel würden in das Gaskissen strömen. Die Menge an unverbrannter Heizladung hinge dabei vom Berstdruck der freisprengbaren Gasauslässe ab. Toleranzen des Berstdruckes könnten somit zu einem unterschiedlichen Aufblasverhalten des Gaskissens führen. Erst die erfindungsgemäße Steuerung des Druckes im Treibgasbehälter ermöglicht eine optimale Umsetzung und ein vollständiges Abbrennen der Heiz-/Treibladung.

Das Drosselelement kann stationär angeordnet oder aber gegen den Berstverschluß beweglich geführt sein (Patentanspruch 11). Mögliche Ausgestaltungen eines beweglichen Drosselelementes, insbesondere in Verbindung mit einer oder mehreren Drosselöffnungen, die sich synchron mit dem Drosselelement bewegen, sowie die damit verbundene Vorteile ergeben sich aus den Patentansprüchen 12 bis 15. Mit den dort angegebenen Maßnahmen läßt sich auch eine zeitliche Verzögerung des Treibgasaustrittes steuern. Mit den in Patentanspruch 16 angegebenen Strömungs- oder Bypasskanälen kann die Zeitverzögerung zusätzlich beeinflußt werden; darüber hinaus aber auch noch die aus dem Treibgasbehälter pro Zeiteinheit ausströmende Treibgasmenge. Auch für diese Maßnahmen behält sich die Anmelderin eigenständigen Schutz vor, wenngleich sie besonders bevorzugt in einem Verfahren nach Patentanspruch 1 oder einem Sicherheitssystem nach Patentanspruch 10 eingesetzt werden.

Entsprechendes gilt auch für das Verfahren nach Anspruch 4 bzw. das Sicherheitssystem nach den Ansprüchen 23 oder 24. Die stufenweise Freigabe des Druckgases sorgt für eine weitere Vergleichmäßigung des Aufblasens des Gaskissens. Zusätzlich erhöhen die im Patentanspruch 24 angegebenen Zwischenwände die Stabilität des Druckgasbehälters.

Vorzugsweise wird zur Abschirmung der Füllgase untereinander und gegen den Außenraum, ein für wenigstens zwei Füllgasspeicher gemeinsamer Berstverschluß verwendet, der bevorzugt die Gasauslässe der Druckspeicher verschließt.

Hierdurch ergibt sich eine einfache Möglichkeit, ein gleichzeitiges Öffnen der Speicherbehälter bzw. eine gleichzeitige Freigabe der Füllgase sicherzustellen (Patentansprüche 6 und 18). Eigenständiger Schutz hierfür ist Gegenstand der Stammanmeldung 91 903 650.9-2306.

Bevorzugt ist der Berstverschluß einstückig oder mehrteilig ausgebildet. Bei einem mehrteiligen Berstverschluß sind die Teile jedoch formschlüssig verbunden. Ein derartiger Berstverschluß ist einfach herstellbar, insbesondere einfach montierbar (Patentansprüche 7 und 19).

Nach einer weiteren bevorzugten Ausführungsform werden zum Zusammenführen der Füllgasströme Mittel verwendet, deren Anordnung und Ausgestaltung nach Art eines Mehrwegeventiles, insbesondere Dreiwegeventiles erfolgt. Die Elemente dieser Mittel sind bevorzugt die Gasauslässe, deren gemeinsamer Berstverschluß und der Raum der Gaszusammenführung. Hierdurch ist eine genaue und steuerbare Führung der Gasströme gewährleistet (Patentansprüche 9 und 20).

Der in Patentanspruch 21 angegebene Gegenstand verbindet die Vorteile eines Hybridsystemes mit denen eines torusförmigen Druckgasbehälters und eines in dessen Zentralloch angeordneten Treibgasbehälters. Der Berstverschluß ist hierbei als scheibenartiges Element ausgestaltet und deckt die Druckgasauslässe des Druckgasbehälters und des Treibgasbehälters von außen her ab. Das scheibenartige Berstverschlußelement ist weiterhin über eine erste und umlaufende Sollbruchnaht mit dem äußeren Rand eines rohrstutzenartig ausgebildeten Treibgasauslasses verbunden; zusätzlich ist es über eine zweite umlaufende Sollbruchnaht mit der Außenwand des Druckgasbehälters oder einem davon abstehenden Teil verbunden.

Weitere bevorzugte Ausführungsformen ergeben sich aus den übrigen Patentansprüchen.

Nachfolgend werden die Erfindung und deren Vorteile anhand von Ausführungsbeispielen und der beigefügten schematischen, im wesentlichen auf das Prinzip beschränkten Zeichnung näher erläutert. In der Zeichnung zeigen:
- Fig. 1: einen teilweisen Schnitt durch ein Lenkradsystem;
- Fig. 2: einen Längsschnitt durch ein weiteres Ausführungsbeispiel mit einem torusförmigen Druckbehälter und einer im Zentralloch angeordneten Heiz- oder Treibgaskammer;
- Fig. 3: den um die Zentralachse liegenden Bereich eines weiteren Ausführungsbeispieles im Schnitt, einschließlich eines zugehörigen Druck-Graphen;
- Fig. 4: einen Schnitt durch ein Ausführungsbeispiel für einen einstückig mit weiteren Teilen des Sicherheitssystemes verbundenen Berstverschluß;
- Fig. 5: ein Ausführungsbeispiel für ein Lager des in Fig. 4 gezeigten Berstverschlusses;
- Fig. 6: ein Ausführungsbeispiel mit einem stationären Drosselelement, in der bei Fig. 3 gewählten Darstellungsart.
- Fig. 7: eine Variante des in Fig. 6 dargestellten Ausführungsbeispieles;
- Fig. 8: ein Ausführungsbeispiel mit einem beweglichen Drosselelement, wiederum in zeichnerischer Darstellung wie bei Fig. 3;
- Fig. 9: ein weiteres Ausführungsbeispiel mit beweglichem Drosselelement und armierter Treibsatzhalterung;
- Fig. 10: eine Variante des Ausführungsbeispiels der Fig. 9, bei welcher das bewegliche Drosselelement zur zeitlichen Verzögerung des Treibgsaustrittes modifiziert ist;
- Fig. 11: eine Variante des in Fig. 10 dargestellten Ausführungsbeispiels;
- Fig. 12 bis 15: Treibsatzhalterungen mit angrenzenden Teilen, wiederum in zeichnerischer Darstellung nach Art der Fig. 3;
- Fig. 16: einen Schnitt durch ein Ausführungsbeispiel mit mehrteiligem Berstverschluß, in zeichnerischer Darstellung nach Art der Fig. 2; und
- Fig. 17: einen Schnitt durch ein Beifahrersicherheitssystem mit einem in mehrere Kammern unterteilten Druckgasbehälter.

Im folgenden wird eine Terminolgie verwendet, die der leichteren Lesbarkeit der Beschreibung dient, jedoch nicht einschränkend zu verstehen ist. Beispielsweise beziehen sich die Ausdrücke "oben", "unten", "rechts", "links", "innen" und "außen" auf die relativen Orte zur geometrischen Mitte der zeichnerischen Darstellung von Ausführungsbeispielen. Die genannte Terminologie schließt die oben speziell erwähnten Worte sowie Ableitungen von diesen Worten und Worte ähnlicher Bedeutung ein. Im übrigen tragen in sämtlichen Zeichnungen Teile gleicher Wirkung in der Regel das gleiche Bezugszeichen.

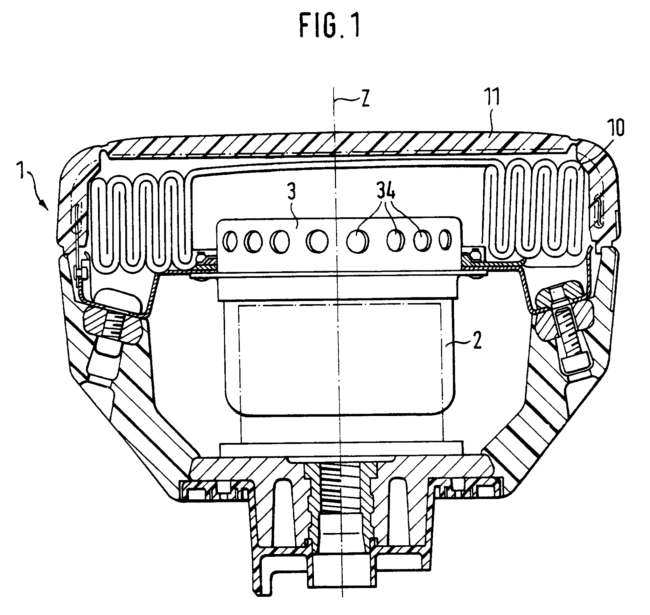

Das in Fig. 1 gezeigte Ausführungsbeispiel zeigt übersichtsartig ein Sicherheitssystem 1, das in einem schüsselartigen Innenteil eines Kraftfahrzeuglenkrades angeordnet ist, etwa nach Art der in den deutschen Offenlegungsschriften DE-A-21 31 902 oder DE-A-21 43 165 beschriebenen Systeme. Das Füllmedium für das Gaskissen 10 (auch Airbag oder Luftkissen genannt), ist beispielsweise ein Hybridgas, d.h. ein Gemisch aus einem unter Druck gespeicherten Gas und einem aus einem Treibsatz erzeugten Treibgas, auch Generatorgas genannt. In Fig. 1 ist lediglich der Außenumfang eines Druckbehälters 2 für das Druckgas zu sehen. Bei Auftreten eines crash-charakteristischen Signals werden der Druckgasbehälter 2 und ein nicht gezeigter Treibgasbehälter geöffnet. Die beiden Gase strömen dann durch einen Diffusor 3 und dessen Auslässe 34 und blasen schließlich das Gaskissen 10 auf, bis es eine Abdeckung 11 aufbricht und sich schützend vor den Fahrer des Kraftfahrzeuges legt. Im übrigen ist die Sicherheitseinrichtung 1 rotationssymmetrisch zu einer Zentralachse Z angeordnet.

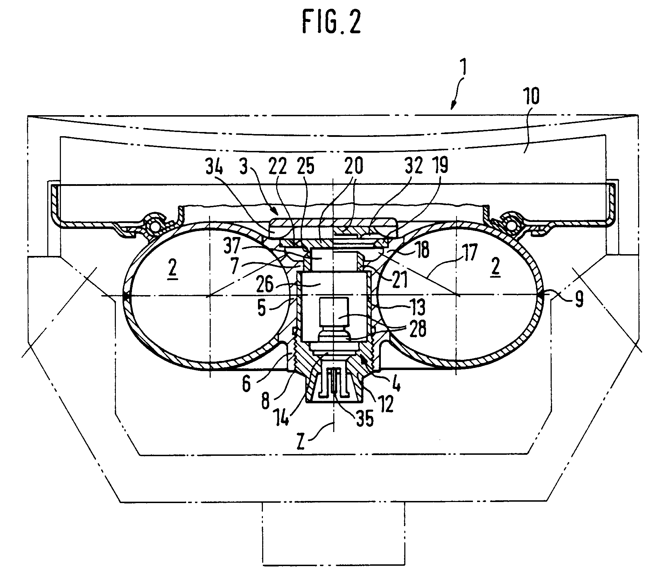

Fig. 2 zeigt im Längsschnitt ein weiteres Ausführungsbeispiel des Sicherheitssystemes 1. Der Druckgasbehälter 2 ist im wesentlichen torusförmig ausgebildet, hat also die Form eines Hohlringkörpers. Ein derartiger Körper zeichnet sich durch hohe Druckfestigkeit, relativ kleine Oberfläche und großes Volumen aus.

Im Zentralloch des Druckgasbehälters 2 ist eine Auslöseeinrichtung 4 im wesentlichen mittig angeordnet. - Das Zentralloch ist der vom Hohlringkörper umgebene, Bereich um die Zentralachse Z. - Die Auslöseeinrichtung 4 ist als Behältereinsatz ausgebildet und dient als Kammer 26 zur Erzeugung und kurzzeitigen Speicherung des Treibgases. Die Auslöseeinrichtung 4 liegt unmittelbar an der Wandung 5 des Zentralloches an. Die Zentralloch-Wandung 5 ist Teil der Außenwand des Druckbehälters 2. Die Zentralloch-Wandung 5 geht nach unten in einen rohrförmigen Fortsatz 6 über und weist oben eine Schulter 7 auf. Der Behältereinsatz 4 weist einen Behälterboden 12 auf, der in einen hülsenartigen Fortsatz 13, auch Behältereinsatzwandung 13 genannt, übergeht. Die Auslöseeinrichtung 4 ist in das Zentralloch von unten her eingeschraubt, so daß der Behälterboden 12 und der Zentrallochfortsatz 6 über ein Gewinde 8 miteinander verbunden sind. In eingeschraubter Stellung stößt der freie (obere) Rand der Behältereinsatzwandung 13 an die Schulter 7 des Zentralloches an.

Die Behältereinsatzwandung 13 umschließt Kammer 26, im folgenden auch Treibsatzkammer genannt. In der Treibsatzkammer 26 befindet sich ein Treibsatz 28, der nach Erhalt eines crash-charakteristischen Signales Treibgas, also die eine Komponente des Hybridgases erzeugt. Der Treibsatz 28 sitzt in einer den Behälterboden 12 durchgreifenden Treibsatzhalterung 14. Zündpins 35 durchgreifen die Treibsatzhalterung 14. Sie dienen als Anschluß für eine (nicht dargestellte) Zündleitung.

Die Treibgaskammer 26 mündet in einen Treibgasauslaß oder -kanal 37. Der Treibgaskanal 37 ist auf einen Raum 32 im Diffusor 3 gerichtet und wird von einer Hülse, im folgenden Treibgas-Auslaßhülse 21 genannt, umgrenzt. Der Fußbereich der Treibgas-Auslaßhülse 21 ist mit der Zentralloch-Schulter 7 verbunden, vorzugsweise laserverschweißt. Das freie Ende der Treibgas-Auslaßhülse 21 ist über eine Sollbruchnaht 25 mit einem Berstverschluß 20 verbunden, wird also von diesem verschlossen. Der Berstverschluß 20 ist im wesentlichen scheibenartig ausgebildet und über eine weitere Sollbruchnaht 22 mit einem Teil 19 verbunden. Das Teil 19 seinerseits ist mit der dem Zentralloch zugekehrten Außenwandung des Druckgasbehälters 2 verbunden, vorzugsweise laser-verschweißt. Im dargestellten Ausführungsbeispiel sind das Teil 19, der scheibenartige Berstverschluß 20 und die Treibgas-Auslaßhülse 21 als einstückiges Bauelement ausgebildet, was fertigungstechnische Vorteile hat. - Der Berstverschluß 20 ist in der linken Bildhälfte in geschlossenem Zustand und in der rechten Hälfte im aufgesprengten Zustand dargestellt. Diese Darstellung wird, soweit sinnvoll, auch bei den weiteren Figuren beibehalten. -

Überschreitet das Treibgas in der Treibgaskammer 26 einen vorgegebenen Druck, den Berstdruck, sprengt es den Berstverschluß 20 auf.

Die Druckgaskammer 2 weist mehrere Gasauslässe 18 in ihrem dem Berstverschluß 20 zugekehrten ringförmigen Wandabschnitt auf. Die Mittelachsen 17 der Druckgasauslässe 18 laufen sternförmig auf den Raum 32 zu. Das Berstverschlußelement 20, das mit ihm einstückig verbundene Teil 19 und die ebenfalls mit ihm einstückig verbundene Treibgas-Auslaßhülse 21 bilden einen gemeinsamen Verschluß für die Druckgasauslässe 18 und den Treibgasauslass 37. Dieser Verschluß hat etwa die Form einer Scheibe (Berstscheibe 20), auf der ein hülsenförmiger Fortsatz (Treibgas-Außlaßhülse 21) aufsitzt. Zwischen dem Fußpunkt des Fortsatzes und der Scheibe befindet sich ein umlaufender Einstich (Sollbruchnaht 25). Die Scheibe hat einen größeren Durchmesser als ihr Fortsatz und geht über einen weiteren umlaufenden Einstich (Sollbruchnaht 22) in ihrer Peripherie in ein Ringteil (Teil 19) über.

Wird die Berstscheibe 20 aufgesprengt, treffen das Druckgas und das Treibgas im Raum 32 aufeinander.

Die dargestellte Form und Anordnung des Berstverschlusses 20 stellt sicher, daß die Gasauslaßkanäle 18 und 37 stets gleichzeitig freigesprengt werden. Darüberhinaus sind die Gasauslaßkanäle 18 und 37 sowie der außerhalb der Berstscheibe 20 angeordnete Gaszusammenführungsraum 32 nach Art eines Mehrwege-, insbesondere Dreiwege-Ventiles angeordnet. Hierdurch wird sichergestallt, daß das Treibgas bei freigesprengtem Treibgaskanal 37 nicht in den Druckgasbehälter 2 eindringt und diesen druckmäßig belastet. Im Gegenteil, das mit hoher Geschwindigkeit aus dem Treibgasauslass 37 ausströmende Gas reißt aufgrund seiner Sogwirkung (Bernoulli-Prinzip/Wasserstrahlpumpe) das Druckgas mit, saugt es sozusagen aus dem Druckgasbehälter 2 heraus. Schließlich hat die vollständige Abschirmung der beiden Druckkammern 2 und 26 sowie die erstmalige Zusammenführung der darin gespeicherten Gase im Außenraum 32 folgenden Vorteil: die Gase bzw. Druckverhältnisse beeinflussen sich in den Speichern nicht wechselseitig. sondern können unter den für sie jeweils optimalen Bedingungen gespeichert werden.

Im übrigen ist die Einrichtung zur Aufnahme des Gaskissens 10 auf dem Druckbehälter 2 derart aufgesetzt, daß die Diffusorauslässe 34 in das Gaskissen 10 münden. Aus fertigungstechnischen Gründen weist der Druckbehälter 2 eine Schweißnaht 9 auf, die längs der Schnittlinie zwischen seiner radial außen liegenden Wandung und seiner horizontalen Mittelebene geführt ist. Das in den Fig. 1 und 2 dargestellte Ausführungsbeispiel ist außerordentlich kompakt und kann daher bequem im Lenkrad eines Kraftfahrzeuges untergebracht werden.

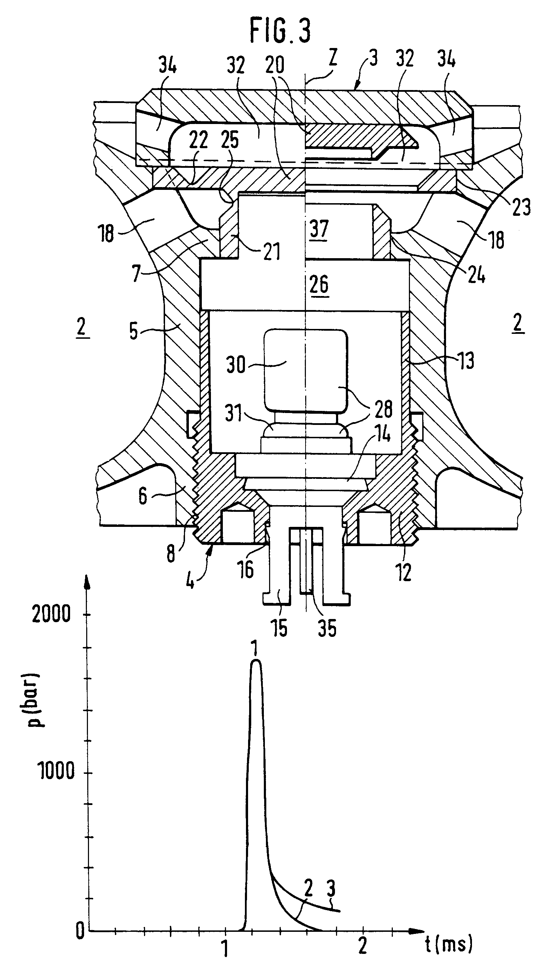

Fig. 3a) zeigt einen Längsschnitt (Vertikalschnitt längs der Zentralachse Z) durch die Treibsatzkammer 26 eines weiteren Ausführungsbeispiels, jedoch in vergrößerter Darstellung.

Dieses Ausführungsbeispiel unterscheidet sich im wesentlichen nur durch seine Auslöseeinrichtung 4, also den Behältereinsatz, vom Ausführungsbeispiel der Fig. 2. Zur Vermeidung von Wiederholungen wird daher auf die Beschreibung der Fig. 2 verwiesen.

In diesem Ausführungsbeispiel reicht die hülsenförmige Behältereinsatzwandung 13 der Auslöseeinrichtung 4 nicht bis an die Zentralloch-Schulter 7 heran. Im übrigen ragt die Treibsatzhalterung 14 deutlich aus dem Behälterboden 12 heraus. Das herausragende Ende der Treibsatzhalterung 14 weist Füßchen 15 auf, welche die Zündpins 35 schützend abschirmen und außerdem mit einer Nase an der Innenwandung einer Ausnehmung 16 im Behälterboden 12 anliegen. Die Treibsatzhalterung 14 kann von oben, d.h. mit den Füßchen 15 voran durch den Behälterboden 12 hindurchgesteckt werden. In der Endlage der Treibsatzhalterung 14 rasten die Füßchen 15 mit ihren Nasen in der Bodenausnehmung 16 ein.

Die Treibsatzhalterung 14 nimmt den Treibsatz 28 auf. Dieser besteht aus einer Heizladung 30 und einer Zündpille 31. Der Treibsatz 28 kann auch als einheitliche Ladung aufgebaut sein, beispielsweise nach Art der Nato-Manöverpatrone 7,92 mm. Es können aber auch sonstige Treibladungen verwendet werden, deren Zusammensetzung an das im Druckbehälter 2 gespeicherte Druckmedium zur Erzielung eines gewünschten Hybridgases, insbesondere zur Erreichung gewünschter Füllparameter des Gaskissens 10 angepaßt sind. Werden das aus dem Druckgasbehälter 2 expandierende Druckgas und das aus der Treibgaskammer 26 strömende Treibgas zu einem Hybridgas gemischt, erhöhen sich bekanntlich nicht nur die Temperatur, das Volumen und der Druck des expandierenden Druckgases, sondern auch dessen Strömungsgeschwindigkeit. Durch geeignete wechselseitige Anpassung des Druckgases und des Treibgases, einschließlich einer Anpassung der wechselseitigen Strömungsverhältnisse, können die Füllparameter des Gaskissens 10, etwa dessen Füllverlauf, einschließlich des Verlaufes der sich ändernden Formen des Gaskissens 10 während des Aufblasvorganges gesteuert werden. Gleiches gilt für die Füllgeschwindigkeit, die Fülltemperatur, den Fülldruck und/oder das Füllvolumen, einschließlich der zeitlichen Änderungen dieser Größen während des Aufblasvorganges.

Fig. 3b) zeigt auch den ungefähren Druckverlauf (zeitliche Änderung des Druckes) in einem Sicherheitssystem 1 ohne die erfindungsgemäße Treibgassteuerung. Dabei zeigen die Kurve 1 den Druckverlauf in der Treibsatzkammer 26 und die Kurven 2 und 3 den Druckverlauf im Gaszusammenführungsraum 32. Die Kurve 2 gibt dabei die Verhältnisse bei leerem Druckgasbehälter 2 und die Kurve 3 die Verhältnisse bei einem Druckgasbehälterdruck von 250 bar wieder.

Mit dem Aufsprengen der Berstscheibe 20 fällt der Druck in der Heizladungskammer 26 schlagartig auf das Druckniveau des Druckgasbehälters 2 ab. Ganz allgemein wird in einem dem Druckgasbehälter entsprechenden Druckbereich, also ca. 250 bar und weniger, der Abbrand der Heizladung 30, d.h. die Umsetzung der darin enthaltenen chemischen Mittel unterbrochen. Unabhängig von der Heizladungsmenge entsteht Brennschluß. Unverbrannte feste Partikel strömen über die Diffusor-Auslässe 34 in das Gaskissen 10. Die Menge an unverbrannter Heizladung 30 hängt vom Berstdruck ab. Toleranzen des Berstdruckes bewirken Streuungen und können somit zu einem unterschiedlichen Aufblasverhalten des Gaskissens 10 führen.

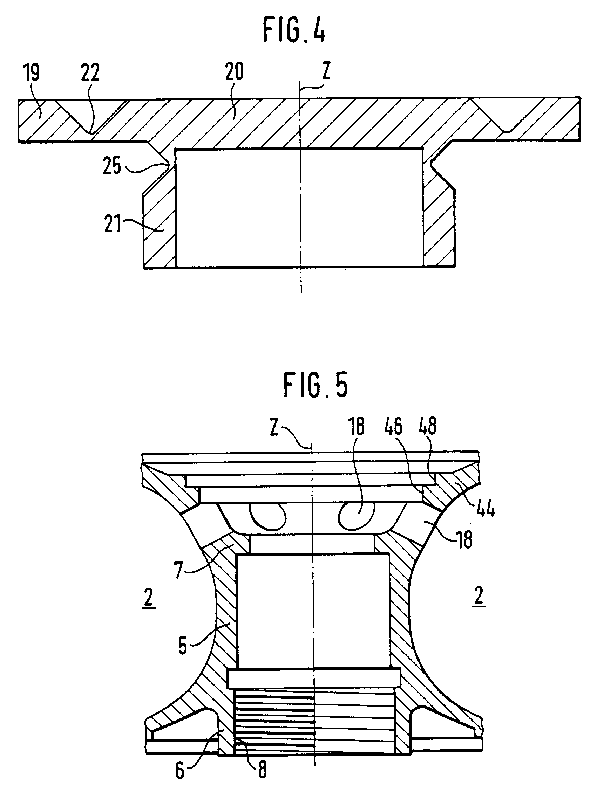

Vor einem Eingehen auf die erfindungsgemäße Lösung des soeben angesprochenen Problemes wird auf Fig. 4 verwiesen. Dort ist die einstückige Verbindung des scheibenartigen Berstverschlusses 20 mit dem ringförmigen Teil 19 und der Treibgas-Auslaßhülse 21 nochmals in vergrößertem Maß dargestellt; ebenfalls die V-förmigen Einstiche, welche die ringförmigen Sollbruchnähte 22 und 25 bilden. Wie bereits ausgeführt, sichert die Anordnung der Teile 19, 20 und 21 stets ein simultanes Freisprengen der Gasauslaßkanäle 18 und 37, und zwar unabhängig davon, ob die drei vorgenannten Elemente aus einem einzigen Teil hergestellt wurden oder sonstwie über die Sollbruchnähte 22 und 25 miteinander verbunden sind.

Fig. 5 zeigt das Lager für die in Fig. 4 gezeigte Verschlußeinrichtung. Oberhalb der ringförmig angeordneten Druckgasauslässe 18 weist die Wandung des Druckgasbehälters 2 eine Verstärkung 44 auf. In dieser Verstärkung sind zwei stufenartig versetzte Ringausnehmungen 46 und 48 vorgesehen. In der unteren Ringausnehmung 46 liegt das Teil 19 auf und ist dort laser-verschweißt. Die Treibgas-Auslaßhülse 21 ist an ihrem Fußende an den freien Enden der Zentralloch-Schulter 7 laser-verschweißt. Die beiden Schweißnähte haben die Bezugszeichen 23 und 24 (siehe z.B. Fig. 3). In der oberen Ringausnehmung 48 sitzt der Diffusor 3.

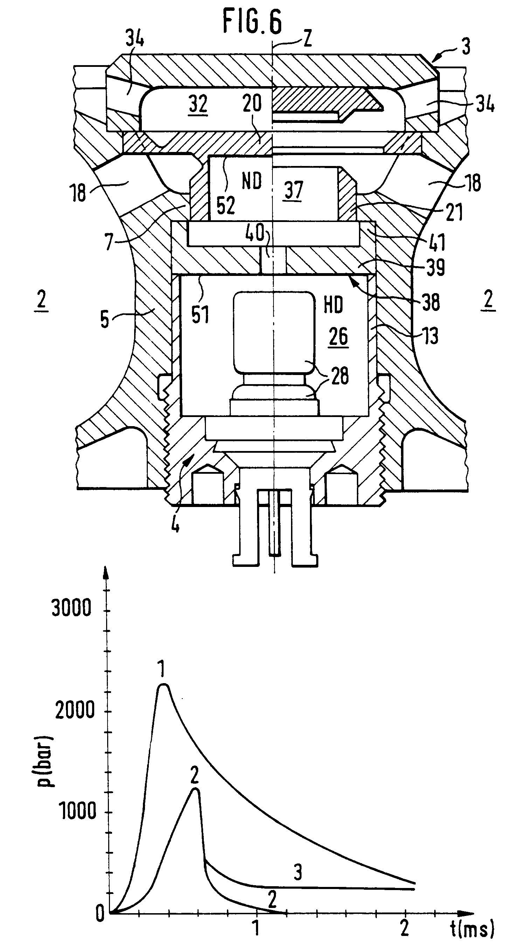

Fig. 6 zeigt ein Ausführungsbeispiel, welches das bei Fig. 3 erläuterte Problem des raschen Druckabfalles löst. Dieses Ausführungsbeispiel unterscheidet sich vom Gegenstand der Fig. 3 durch die erfindungsgemäßen Mittel zur Steuerung des Druckverlaufes des Treibgases im Treibgasgbehälter 26. Dieses Mittel ist ein Drosselelement 38, das zwischen dem Treibsatz 28 und dem Treibgasauslaß 37 stationär angeordnet ist. Das Drosselelement 38 ist als Scheibe 39 mit einem ringförmigen Fortsatz 41 ausgebildet. Die dem Treibsatz 28 zugewandte Scheibenfläche stützt sich dabei mit ihrem Rand auf den freien Enden der hülsenförmgien Behältereinsatzwandung 13 ab. Die freien Enden des Ringfortsatzes 41 stoßen gegen die (der Scheibe 39 zugewandten) freien Flächen der Zentralloch-Schulter 7. Die Mantelfläche des Ringfortsatzes 41 liegt dabei am oberen Abschnitt der Zentrallochwandung 5 an. Demnach überspannt das Drosselelemente 38 den Innenquerschnitt des Treibsatzbehälters 26. Eine Drosselöffnung 40 durchquert die Mitte der Scheibe 39. Die Drosselöffnung 40 kann aber auch zur Mitte versetzt angeordnet sein.

Hierdurch wird der Treibgasbehälter 26, einschließlich des Treibgasauslasses 37 in eine Hochdruckzone HD und eine Niederdruckzone ND unterteilt. Die Hochdruckzone HD kommuniziert mit der Niederdruckzone ND über eine offene Düse vorgegebenen Durchmessers, nämlich die Drosselöffnung 40. Die Drosselöffnung 40 ist so gewählt, daß die sich nach Zündung des Treibsatzes 28 aufbauende Hochdruckzone HD so lange bestehen bleibt, daß der Abbrand der Heizladungsmenge reproduzierbar gewährleistet ist. Gleichzeitig baut sich in dem oberhalb der Scheibe 39 befindlichen Raum die Niederdruckzone ND auf. Die Drosselöffnung 40 gewährleistet nach Aufreißen des Berstverschlusses 20 ein dosiertes Nachströmen heißer Treibgase und somit eine gesteuerte Erwärmung des aus dem Druckgasbehälter 2 ausströmenden Druckgases. Hierdurch kann das Aufblasverhalten des Gaskissens 10 reproduzierbar gesteuert werden.

Das Druckverhalten in der Hochdruckzone HD und in der Niederdruckzone ND wird durch den Druck-Zeit-Graphen im unteren Bildteil wiedergegeben. Der relativ lang anhaltende Druck in der Hochdruckzone HD gewährleistet eine optimale Umsetzung und ein vollständiges Abbrennen der Heiz- und Treibladung. Heiße oder gar brennende Pulverpartikel gelangen nicht mehr in das Luftkissen 10. Auch im Falle einer stärkeren Heiz- und Treibladung ist der Druck in der Niederdruckzone ND auf den in den Kurven 2 und 3 gezeigten Wert begrenzt. Diese Kurven veranschaulichen, daß das Gaskissen 10 praktisch unabhängig vom Druckverlauf in der Hochdruckzone HD schonend und gleichmäßig aufgeblasen wird.

Das bereits angesprochene gesteuerte Nachströmen der heißen Treibgase in den Diffusor 3, genauer den Raum der Gaszusammenführung 32 sorgt für ein gesteuertes Aufheizen des Druckgases und verhindert hierdurch einen Druckabfall des expandierenden Druckgases. Ein derartiger Druckfall wäre besonders bei tiefen Temperaturen gravierend. Bei tiefen Temperaturen würden die sich aufgrund der Expansion abkühlenden Gase noch stärker entspannen. Das Drosselelement 38 macht somit das Sicherheitssystem von äußeren Temperatureinflüssen praktisch unabhängig.

Die im Bereich der Hochdruckzone HD liegende Querschnittsfläche 51 der Scheibe 39 ist größer als die im Bereich der Niederdruckzone ND liegende Querschnittsfläche 52 des Berstverschlusses 20. Diese Querschnittsflächen sind so ausgelegt, daß die Berstquerschnitte reißen, bevor auf der Niederdruckseite ND ein erheblicher Druckanstieg eintritt. Das Druckniveau in der Hochdruckzone HD kann dabei nach den Abbrandverhältnissen durch folgende Steuerparameter festgelegt werden, ohne daß hierdurch andere Parameter beeinflußt würden:
- Abbrandverhalten des Treibmitteltyps;
- Ladedichte des Treibsatzes 28;
- Querschnitt der Drosselöffnung 40.

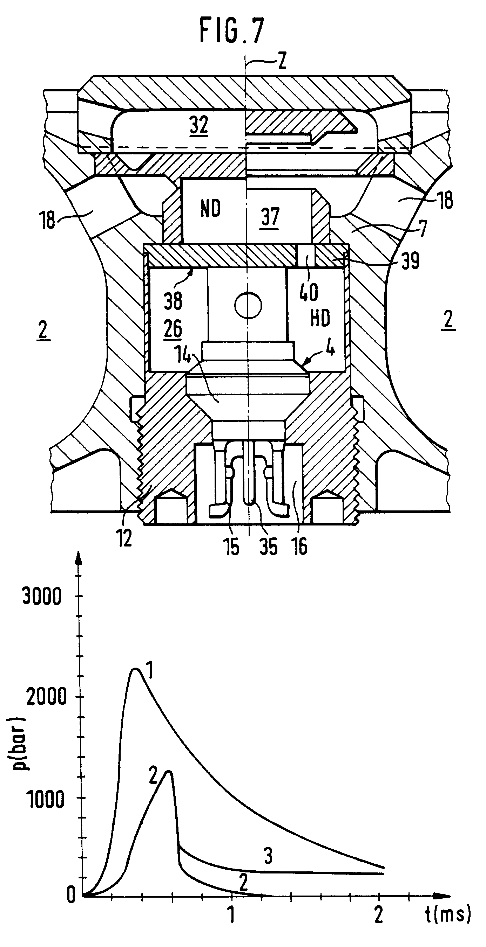

Das Ausführungsbeispiel der Fig. 7 unterscheidet sich im wesentlichen durch eine verkleinerte Hochdruckzone HD vom Ausführungsbeispiel der Fig. 6. Zusätzlich ist in diesem Ausführungsbeispiel die in Fig. 6 angesprochene exzentrische Anordnung der Drosselöffnung 40 bildlich wiedergegeben. Schließlich ist auch die Niederdruckzone 37 kleiner als beim Ausführungsbeispiel der Fig. 6.

Im übrigen weist das hier gezeigte Drosselelement 38 keinen ringförmigen Fortsatz 41 auf. Statt dessen liegt die Scheibe 39 unmittelbar an der Zentralloch-Schulter 7 an und stützt sich über eine Schulter in ihrem Randbereich auf den freien Enden der hülsenförmigen Behältereinsatzwandung 13 ab. Der Treibsatzbehälterboden 12 ist gegenüber dem Ausführungsbeispiel der Fig. 6 in Richtung der Treibsatzkammer 26 hochgezogen. Gleiches gilt auch für die Bodenausnehmung 16. Die Füßchen 15 und die Zündpins 35 verbleiben vollständig in der Bodenausnehmung 16. Sie sind daher noch besser gegen äußere Einwirkungen geschützt. Schließlich hat die Treibsatzhalterung 14 eine andere Form als die vorangehend beschriebenen Ausführungsbeispiele.

Das Druckverhalten dieses Ausführungsbeispiels stimmt im wesentlichen mit dem in Fig. 6 gezeigten Druckverhalten überein.

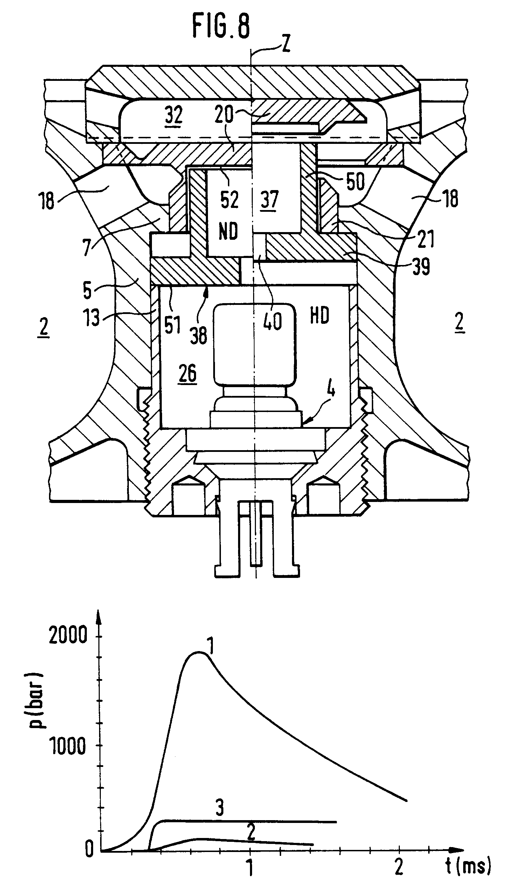

Das Ausführungsbeispiel der Fig. 8 unterscheidet sich im wesentlichen dadurch von dem Ausführungsbeispiel der Fig. 6, daß das Drosselelement 38 gegen den Berstverschluß 20 beweglich in der Treibsatzkammer 26 geführt ist und als Stößel zum Aufbrechen des Berstverschlusses 20 dient.

Mit der Bewegung des Drosselementes 38 gegen den Berstverschluß 20 bewegt sich auch die Niederdruckzone ND in Richtung des Gaszusammenführungsraumes 32.

Im einzelnen weist das Drosselelement 38 die bereits beschriebene Scheibe 39 auf. Diese stützt sich mit ihrem unteren Rand auf dem freien Hülsenrand der Behältereinsatzwandung 13 ab. Die Umfangsfläche der Scheibe 39 wird längs der Zentrallochwandung 5 nach oben geführt, bis sie an die Zentralloch-Schulter 7 anschließt. Die dabei zurückgelegte Distanz wird im folgenden Hub- bzw. Hublänge genannt. Die Drosselöffnung 40 führt zentrisch durch die Scheibe 39 durch, kann aber auch bei diesem Ausführungsbeispiel grundsätzlich exzentrisch angeordnet sein. Von der Scheibe 39 steht ein hülsenartiger Aufsatz 50 in Richtung des Berstverschlusses 20 ab. Der freie Hülsenrand des Aufsatzes 50 endet unmittelbar vor dem Berstverschluß 20 oder liegt an diesem an. Die Mantelfläche des Aufsatzes 50 wird bei ihrem Weg gegen den Berstverschluß 20 in der Treibgas-Auslaßhülse 21 geführt.

Durch die bereits angesprochene Mitführung der Niederdruckzone 37 in Richtung des Berstverschlusses 20 wird auch das Mündungsende des Treibgas-Auslaßkanales 37 nach oben, d.h. in den Ort der Gaszusammenführung 32 hineinverschoben, also über die freien Enden der Treibgas-Auslaßhülse 21 hinaus. Bei Aktivierung der Auslöseeinrichtung 4 stützt die Drosselscheibe 39 über den hülsenförmigen Ansatz 50 den in der Treibsatzkammer 26 sich aufbauenden Hochdruck am Berstverschluß 20 ab. Der Druck in der Heizladungskammer 26 erreicht hier nicht die in Fig. 6 gezeigten Druckspitzen, sondern liegt deutlich darunter (siehe Druck-Graphen). Auch in diesem Druckbereich ist nach wie vor eine vollständige chemische Umsetzung, also ein Abbrand der Heizmittel- oder Treibsatzmenge gewährleistet. Die Reduzierung der Druckspitzen ist eine Folge der Bewegung des Drosselelementes 38 gegen die Berstscheibe 20 und einer damit verbundenen Vergrößerung des Treibsatzkammervolumens. Hinzu kommt, daß die im Treibgas gespeicherte Energie und damit der Druck durch die Hubarbeit des Drosselementes 38 reduziert wird. Dabei ist natürlich auch das Querschnittsverhältnis zwischen der von der Hochdruckzone HD beaufschlagten Oberfläche 51 der Drosselscheibe 39 und der von der Niederdruckzone ND beaufschlagten Oberfläche 52 des Berstverschlusses 20 zu berücksichtigen. Hierbei ist davon auszugehen, daß der Berstverschluß 20 auch dann früher aufbricht als beim Ausführungsbeispiel der Fig. 6, wenn in beiden Ausführungsbeispielen gleiche Querschnittsverhältnisse zwischen den Oberflächen 51 und 52 vorliegen. Aufgrund des früheren Aufbrechens des Berstverschlusses 20 liegt der Druck in der Niederdruckzone ND und damit auch der Druck im Gaszusammenführungsraum 32 unter dem des Ausführungsbeispiels der Fig. 6, was durch die Druck-Graphen 2 und 3 bestätigt wird. Im übrigen können beim Ausführungsbeispiel der Fig. 8 langsamere Treibmittel und dickere Berstquerschnitte verwendet werden. Hierdurch erhält man mehr Flexibilität bei der Verwendung bestimmter Materialien. Einflüsse durch schneller oder langsamer abbrennende Treibmittel sind vernachlässigbar.

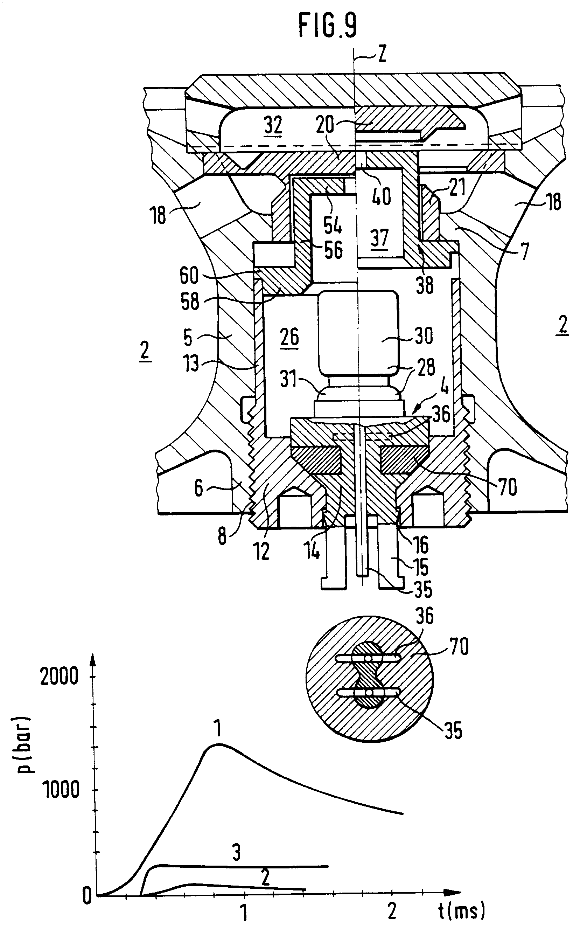

Das Ausführungsbeispiel der Fig. 9 unterscheidet sich im wesentlichen durch folgende Merkmale vom Ausführungsbeispiel der Fig. 8: das Drosselement 38 und die Treibsatzhalterung 14 sind anders ausgestaltet. Die Treibsatzhalterung 14 wird später beschrieben. Es sei jedoch an dieser Stelle schon erwähnt, daß anstelle der gezeigten Treibsatzhalterung 14 auch eine der Treibsatzhalterungen 14 der vorausgehenden Figuren verwendet werden kann.

Das Drosselelement 38 ist wiederum gegen den Berstverschluß 20 beweglich geführt, diesmal aber nach Art eines innen hohlen Kolbens ausgestaltet. Insgesamt dichtet es die Hochdruckzone HD bzw. Treibsatzkammer 26 gegen den Berstverschluß 20 ab. Hierdurch lassen sich - zusätzlich zu den bereits anhand der Fig. 8 erläuterten Vorzügennoch günstigere Druck- und Aufblasverhältnisse erzielen.

Im einzelnen weist das hohlkolbenartige Drosselelement 38 eine an der Berstscheibe 20 anliegende oder nur wenig beabstandete Stirnfläche 54, eine sich daran anschließende, sich in die Treibgaskammer 26 erstreckende Mantelfläche 56 und schließlich einen ringflanschförmigen Ansatz 58 auf. Der Ansatz 58 ist radial nach außen bis an die Behältereinsatzwandung 13 geführt, stützt sich mit einer Schulter 60 auf dem freien Hülsenrand der Behältereinsatzwandung 13 ab und liegt gleichzeitig gegen die Zentrallochwandung 5 an. Das Drosselelement 38 hat also im wesentlichen die Form eines auf dem Kopf stehenden U mit einem flanschförmigen Ringrand. Es wird während seiner Hubbewegung einerseits von der Behältereinsatzwandung 13 und der Zentrallochwandung 5 geführt, nämlich am äußeren Rand des Ansatzes 58 und der Schulter 60. Zusätzlich wird die Mantelfläche 56 innerhalb der Treibgas-Auslaßhülse 21 geführt. Die Drosselöffnung 40 ist in diesem Ausführungsbeispiel in der Stirnfläche 54 angeordnet. Sie wird während der Hubbewegung unmittelbar an den Gaszusammenführungsraum 32 herangeführt.

Die hohlkolbenfömige Ausbildung des Drosselelementes 38 vergrößert das Volumen der Hochdruckzone HD um das in Fig. 8 gezeigte Volumen der Niederdruckzone ND. Bereits hieraus ergibt sich eine weitere Druckabsenkung um etwa 20 %. Der sich nach Aktivierung der Auslöseeinrichtung 4 und Abbrennen der Heiz- und Treibladung 28 aufbauende Druck stößt das Drosselelement 38 mit seiner Stirnfläche 54 gegen den Berstverschluß 20. Dieser bricht nach Überschreiten des Berstdruckes auf. Die beiden Gasauslaßkanäle 18 und 37 werden simultan freigesprengt. Die gespeicherten Gase entweichen und vereinigen sich im Gaszusammenführungsraum 32 zu einem Hybridgas. Dabei steuert wieder die Drosselöffnung 40 den Druck, die Temperatur und das Volumen des Hybridgases. Der Druck-Graph veranschaulicht die günstigen Druck- und Aufblasverhältnisse.

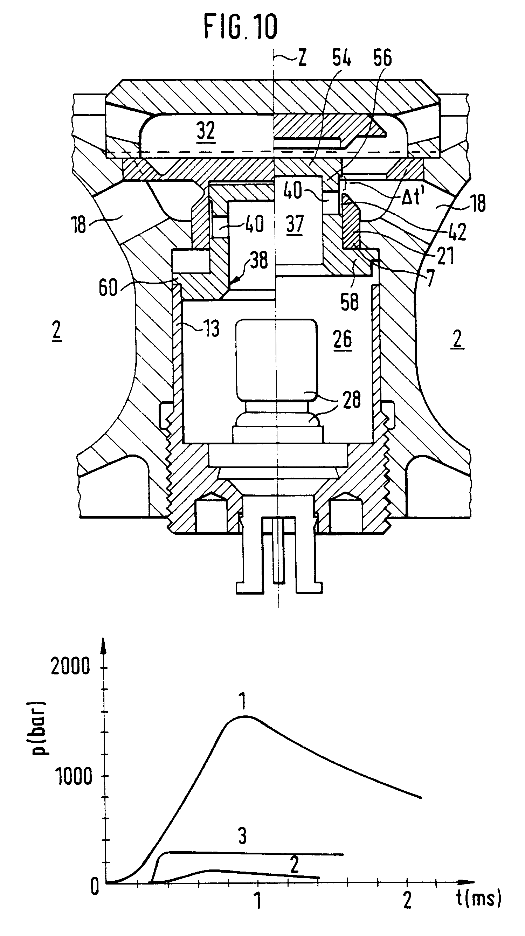

Das Ausführungsbeispiel der Fig. 10 unterscheidet sich vom Ausführungsbeispiel der Fig. 8 lediglich durch eine andere Ausgestaltung des Drosselelementes 38; vom Ausführungsbeispiel der Fig. 9 zusätzlich noch durch eine andere Ausgestaltung der Treibsatzhalterung 14. Soweit das Ausführungsbeispiel der Fig. 10 mit den Ausführungsbeispielen der Fig. 8 und 9 übereinstimmt, wird auf die Beschreibung dieser Figuren verwiesen.

Das im Ausführungsbeispiel der Fig. 10 dargestellte Drosselelement 38 unterscheidet sich dadurch vom Drosselelement der Fig. 9, daß die Drosselöffnung 40 nicht in der Stirnfläche 54 sondern in der Mantelfläche 56 angeordnet ist. Statt einer Drosselöffnung 40 können auch mehrere Drosselöffnungen 40 vorgesehen sein, beispielsweise in ringförmiger Anordnung.

Die Drosselöffnung(en) 40 sind so in der Mantelfläche 56 angeordnet, daß sie sowohl in der stationären Phase als auch während der Hubbewegung des Drosselementes 38 von der Treibgas-Auslaßhülse 21 abgedeckt werden. Ist nur eine Drosselöffnung 40 vorgesehen, kommt sie nach Vollendung der Hubbewegung des Drosselelementes 38 oberhalb der Treibgas-Auslaßhülse 21 zu liegen. Hierdurch wird eine Verzögerung der Treibgasfreigabe bewirkt. Die Hublänge des Drosselelementes 38 entspricht dabei einer Zeitverzögerung Δ t' .

Die Mantelfläche 56 kann auch eine kanalförmige Ausnehmung 42 im Bereich der Drosselöffnung 40 aufweisen, in diesem Bereich also einen geringfügigen Abstand von der Innenwandung der Treibgas-Auslaßhülse 21 haben. Die Treibgasfreigabe erfolgt in diesem Fall, sobald das der Stirnfläche zugewandte Ende der Kanal-Ausnehmung 42 über das freie Ende der Treibgas-Auslaßhülse 21 hinaus bewegt wird. Die gewünschte Zeitverzögerung Δ t' kann also hierbei durch die Länge der kanalförmigen Ausnehmung 42 bestimmt, d.h. gesteuert werden. Die Treibgasfreigabe setzt in diesem Fall also bereits ein, bevor die Drosselöffnung 40 das freie Ende der Treibgas-Auslaßhülse 21 erreicht hat.

Im dargestellten Ausführungsbeispiel wird die Drosselöffnung 40 auch noch nach Vollendung der Hubbewegung von der Treibgas-Auslaßhülse 21 abgedeckt. Gleichwohl kann Treibgas durch die kanalförmige Ausnehmung 42 austreten, wenngleich in verminderter Rate. Diese Rate kann unter anderem durch die Anzahl der Drosselöffnungen 40 und der Kanäle 42 gesteuert werden. Insgesamt wird die pro Zeiteinheit austretende Treibgasmenge durch die Anzahl und den freien Strömungsquerschnitt der kanalförmigen Ausnehmung(en) 42 und der Drosselöffnung(en) 40 bestimmt. Die Zeitverzögerung Δ t' für die Treibgasfreigabe hängt von der Länge der kanalförmigen Ausnehmung(en) 42 ab.

Die Zeitverzögerung Δ t' und die pro Zeiteinheit ausströmende Treibgasmenge sind genau abstimmbar auf die Ausströmgeschwindigkeit des Druckkgases, was zu einem sehr gleichmäßigen Aufblasen des Gaskissens 10 mit niedrigen Druckspitzen und i.w. gleichbleibendem Druck führt. Das Aufblasverhalten des Gaskissens 10 kann unter allen Bedingungen sicher reproduzierbar gesteuert werden.

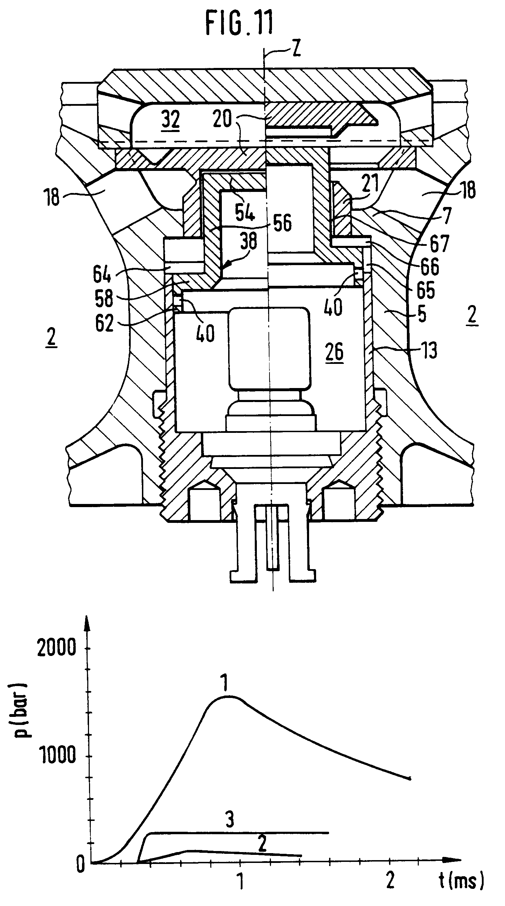

Das Ausführungsbeispiel der Fig. 11 unterscheidet sich vom Ausführungsbeispiel der Fig. 10 lediglich durch einen Versatz der Drosselöffnungen 40 von der Mantelfläche 56 in einen ringförmigen Steg 62, der vom ringflanschförmigen Ansatz 58 in Richtung der Treibsatzkammer 26 vorsteht; ferner durch eine andere Ausgestaltung des Drosselelementes 38 im Bereich des Ansatzes 58 und eine Führung des Treibgases entlang eines Bypasskanales 65, 66, 67. Mit anderen Worten ist das Drosselelement 38 wieder hohlkolbenartig ausgestaltet. Es liegt auch in diesem Fall mit seiner Stirnfläche 54 am Berstverschluß 20 an. Auch seine Mantelfläche 56 wird wiederum von der Treibgas-Auslaßhülse 21 geführt, weist jedoch keine Drosselöffnung auf. Zusätzlich wird das Drosselelement 38 vom flanschförmigen Ansatz 58 in der hülsenförmigen Behältereinsatzwandung 13 geführt. Der Ansatz 58 liegt nämlich samt seinem ringförmigen Steg 62 an der Behältereinsatzwandung 13 an. Schließlich wird das Drosselelement 38 auch noch von der Zentrallochwandung 5 geführt. Hierzu dienen Rippen 64, die auf der der Zentralloch-Schulter 7 zugewandten Seite des flanschförmigen Ansatzes 58 angeordnet sind und mit ihren radial außenliegenden Enden an der Zentrallochwandung 5 anstoßen. Die Rippen 64 stehen also schulterartig über den Ansatz 58 hinaus und stützen sich auf dem freien Rand der Behältereinsatzwandung 13 ab. Nach vollendeter Hubbewegung liegt die obere freie Kante der Rippe 64 an der Zentrallochschulter 7 an.

Diese Ausgestaltung des ringflanschförmigen Ansatzes 58 führt zu dem bereits angesprochenen Bypasskanal 65 und 66 zwischen dem Ansatz 58 und der Zentrallochwandung 5 bzw. der Zentrallochschulter 7. Der Bypasskanal 65, 66 wird von dem weiteren Bypasskanal 67 zwischen der Mantelfläche 56 und der Innenwandung der Treibgas-Auslaßhülse 21 fortgeführt.

Durch den Abstand zwischen der oder den Drosselöffnung(en) 40 und dem freien Rand der hülsenförmigen Behältereinsatzwandung 13 kann wiederum die Zeitverzögerung Δ t' der Freigabe des Treibgases aus dem Treibgasbehälter 26 gesteuert werden. Diese Zeitverzögerung Δ t' führt dazu, daß das Treibgas entsprechend später als das Druckgas am Ort der Gaszusammenführung 32 eintrifft. Die Zeitverzögerung Δ t' kann zusätzlich noch durch die Länge des Bypasskanales 65, 66, 67 gesteuert werden. Der freie Strömungsquerschnitt des Bypasskanales bestimmt die auströmende Treibgasrate und natürlich auch den Druckverlauf in der Treibgaskammer 26. Eine weitere Steuerungsmöglichkeit besteht darin, daß - bei mehreren Drosselöffnungen 40 - nicht alle Drosselöffnungen gleichzeitig sondern zeitlich versetzt, also nacheinander von der Treibgas-Auslaßhülse 21 freigegeben werden. Dies gilt selbstverständlich auch für das Ausführungsbeispiel der Fig. 10.

Grundsätzlich können die beweglichen Drosselelemente 38 auch ohne Stößelfunktion ausgestattet sein, also nicht die Berstmembran 20 aufbrechen. Die Bewegung des Drosselelementes 38 dient dann im wesentlichen der Vergrößerung der Hochdruckzone HD und des zusätzlichen Druckabbaues durch verrichtete Hubarbeit. Synchron mit der Vergrößerung der Hochdruckzone HD verkleinert sich in diesem Fall die Niederdruckzone ND.

Die in den Fig. 7 bis 11 geschilderten Ausführungsbeispiele haben folgende gemeinsamen Vorteile: die Niederdruckkammer ist als Stößel ausgebildet. Der Heizladungsdruck geht also unmittelbar auf den Berstverschluß 20. Der Heizladungsdruck dient zur Bewegung des Stößels und somit zum Öffnen des Berstverschlusses 20. Die mit dem Druck verbundene Temperatur des Heiz- bzw. Treibgases erwärmt die expanierenden Gase aus der Druckgaskammer 2. Bei Vergrößerung der vom Druck beaufschlagten Fläche 51 des Stößels gegenüber der Fläche 52 des Berstverschlusses 20 läßt sich der Berstverschluß 20 leichter oder auch bei geringerem Druck öffnen. Schließlich werden die Druckspitzen in der Hochdruckzone HD auch noch dadurch verringert, daß (infolge der größeren Stößelfläche) der Berstverschluß 20 früher aufbricht und das Volumen der Hochdruckzone HD simultan mit der Bewegung des Stößels vergrößert wird. Soweit Bypasskanäle, also beispielsweise die Kanäle 42 und 65 bis 67 vorgesehen sind, kommt das Heizgas verzögert zur Wirkung. Die Wirkung des Treibgases kann also so gesteuert werden, daß die Hybridgas-Druckkurve auf einem konstanten Wert bleibt. Durch die Abdichtung der Treibgaskammer 26 gegenüber dem Mischraum bzw. Gaszusammenführungsraum 32 und durch die verzögerte Freigabe des Treibgases aus der Treibgaskammer 26, lassen sich der Zeitpunkt des Gasausströmens und die pro Zeiteinheit ausfließende Treibgasmenge genau steuern. Hierdurch ist das Aufblasen des Gaskissens unter allen Bedingungen sicher reproduzierbar.

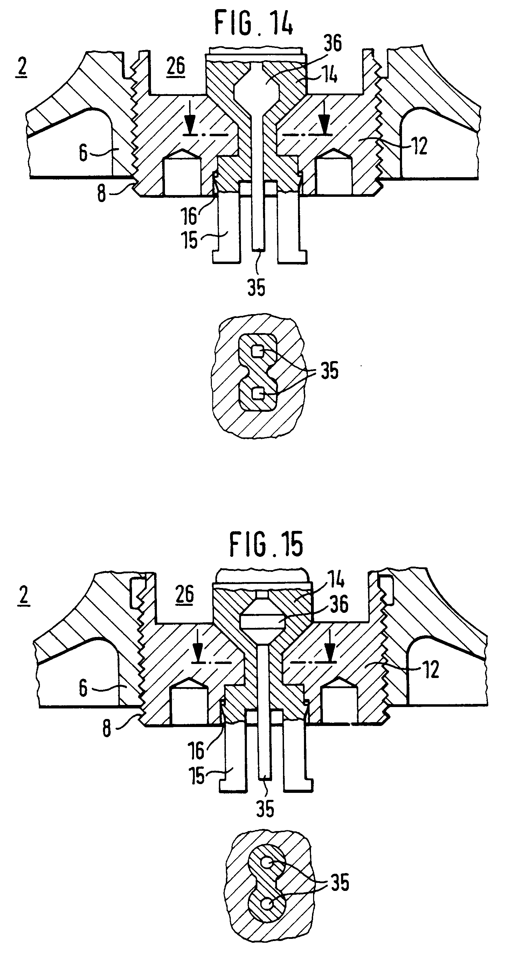

Die Fig. 9 und 12 bis 15 zeigen druckfeste Ausbildungen von Zündpin-Durchführungen und Verstärkungsvorrichtungen an der Treibsatzhalterung 14.

Bei hohen Umgebungstemperaturen, beispielsweise 85 °C, und einem relativ hohen und langanhaltendem Druck in der Hochdruckzone HD ist die Treibsatzhalterung 14 und die Durchführung der Zündpins 35 durch die Treibsatzhalterung 14 außergewöhnlich hohen Belastungen ausgesetzt. Es ist deshalb von Vorteil, Verstärkungselemente vorzusehen, damit die Treibsatzhalterung 14 oder die Zündpins 35 nicht herausgedrückt werden und zu Druckverlusten beim Aufblasen des Gaskissens 10 führen.

Gemäß Fig. 9 hat die Treibsatzhalterung 14 eine im wesentlichen trichterförmige Außenkontur und sitzt in einem entsprechenden Durchgang im Behälterboden 12. Die Treibsatzhalterung 14 kann dabei beispielsweise aus Kunststoff bestehen. Zur Verstärkung weist sie ein gestanzte Metallscheibe 70 auf, die als Armierung dient. Die Metallscheibe 70 hat einen gleichgroßen oder größeren Durchmesser als die Treibsatzhalterung 14.

In der Metallscheibe 70 sind Öffnungen als Durchlässe für die Zündpins 35 und deren Isolierungen eingebracht. Die Größe dieser Öffnungen kann auf das Mindestmaß der für die Isolation der Zündpins 35 notwendigen Distanz reduziert werden. Bei der Montage wird die Zündsatzhalterung 14 samt Metallverstärkung 43 in eine Passung im Behälterboden 12 gedrückt und dort durch Kleben, Pressitz oder andere Arretierungen befestigt.

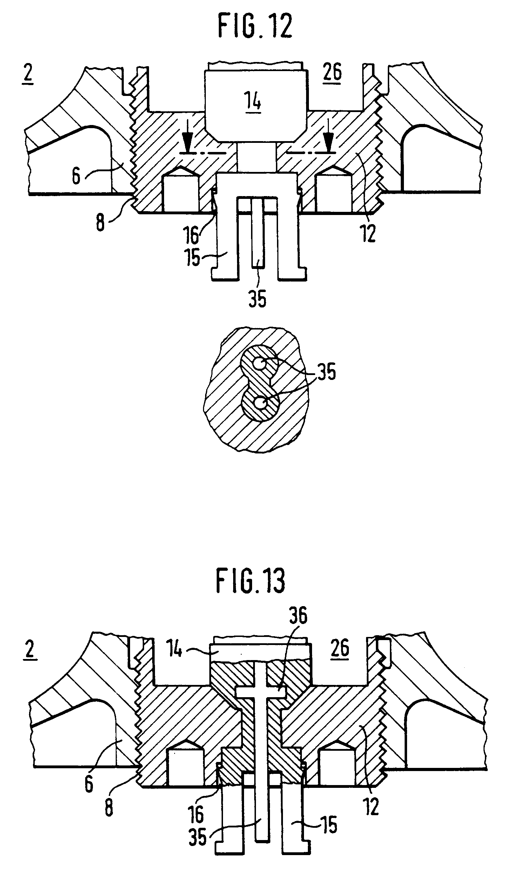

Um bei den enormen Drücken ein Durchpressen der Zündpins 35 auszuschließen, können diese mit senkrecht abstehenden oder konischen Verdickungen 36 versehen sein (Fig. 13 bis 15). Bevorzugt werden die Zündpins 35 mit ihren Verdickungen 36 als Stanzteile hergestellt.

Die Zündpins 35 und die Metallverstärkung 70 können bei der Herstellung der Zündsatzhalterung 14 als Kunststoffteil einfach mit diesem zusammen eingespritzt werden.

Daneben kann auch durch Formgebung der Zündsatzhalterung 14 deren Durchdrücken durch den Behälterboden 12 verhindert werden, so wie dies beispielsweise in Fig. 12, aber auch in den Fig. 2, 3, 6, 8, 10 und 11 dargestellt ist.

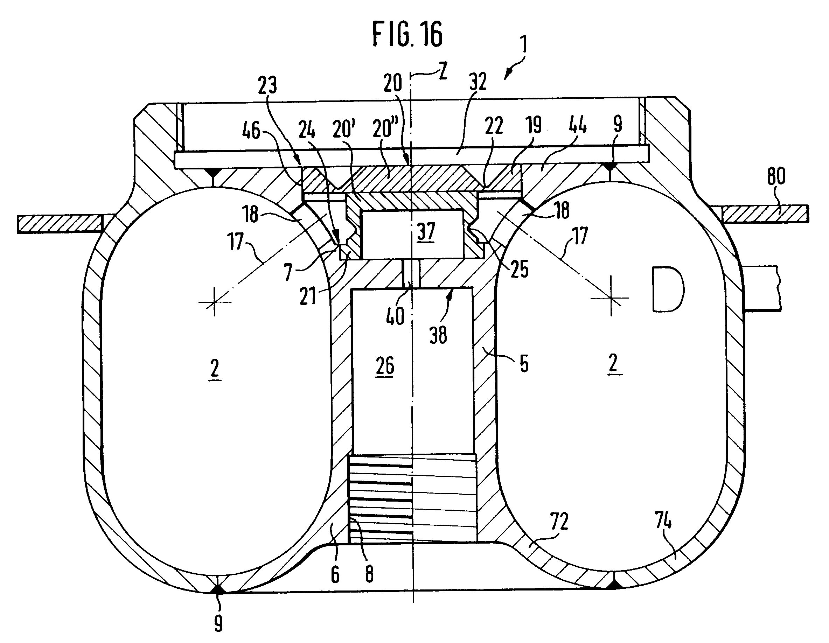

Fig. 16 zeigt ein weiteres Ausführungsbeispiel eines torusformigen Druckgasbehälters 2, dessen Zentralloch an eine (nicht dargestellte) Auslöseeinrichtung bzw. einen Behältereinsatz zur Aufnahme der Treibgaskammer 26 angepaßt ist. Der Druckgasbehälter 2 besteht hier aus zwei Behälterschalen, nämlich einer inneren Behälterschale 72 und einer äußeren Behälterschale 74. Die beiden Behälterschalen sind über zwei ringförmige Schweißnähte 9 oben und unten verschweißt. Das Drosselelement 38 ist hier stationär ausgebildet. Die Gaskanäle 18 und 37, der Berstverschluß 20 und der Raum der Gaszusammenführung 32 sind wiederum nach Art eines Mehrwegeventils angeordnet. Der Berstverschluß ist hier jedoch zweiteilig ausgestaltet. Er hat im Prinzip die gleiche Form wie die bisher dargestellten Berstverschlüsse, besteht jedoch aus einem dem Treibgasauslaßkanal 37 unmittelbar zugewandten unteren Teil 20' und einem damit formschlüssig verbundenen oberen Teil 20''.

Auch dieser Berstverschluß hat die gleichen Vorteile wie die bisher beschriebenen Berstverschlüsse 20. Die Abdichtung des Druckgasbehälters 2 gegenüber der Treibgaskammer 26 und dem Raum der Gaszusammenführung 32 kann absolut sicher mittels Schweißnähten, vorzugsweise den Laser-Schweißnähten 23 und 24 gewährleistet werden. Hinzu kommt, daß die Öffnung des Druckgasbehälters 2 und der Treibgaskammer 26 simultan erfolgt oder kontrolliert gesteuert werden kann, was beispielsweise bei dem eingangs genannten US-A-4 121 300 unmöglich ist, da dort zwei auf Distanz stehende Berstscheiben vorgesehen sind. Die Anordnung nach Art eines Mehrwegeventiles stellt dabei sicher, daß kein Gas aus der Treibgaskammer 26 in den Druckgasbehälter 2 strömt. Vielmehr strömt das Treibgas ausschließlich in den Ort der Gaszusammenführung 32. Die Druckgaskammer 2 wird also nicht mit den Druckspitzen des Treibgases belastet. Der Berstdruck des Berstverschlusses kann daher nahezu beliebig hoch sein, jedenfalls weit über der Druckbelastbarkeit des Druckgasbehälters 2 liegen. Dies stellt einen großen Vorteil gegenüber der DE-A-23 48 834 dar, bei der die Heizladung zuerst in den Druckgasbehälter strömt.

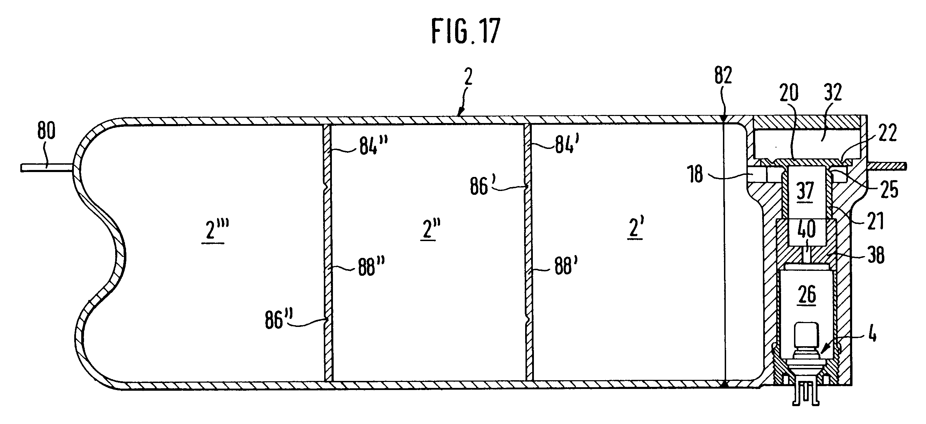

Das in Fig. 17 dargestellte Ausführungsbeispiel zeigt ein Sicherheitssystem 1, das vorzugsweise als sogenanntes Beifahrersystem in einem Kraftfahrzeug verwendet und dort mittels einer Montagevorrichtung 80 befestigt wird.

Der Druckbehälter 2 ist hier nicht torusförmig sondern gasflaschenförmig ausgebildet und dabei in mehrere Kammern unterteilt, nämlich die Kammern 2', 2'' und 2'''. Zur Stabilisierung des Druckbehälters 2 ist der Behälterboden so ausgebildet, wie von Weinflaschen her bekannt. Die Kammern 2'und 2'' werden durch eine Zwischenwand 84' voneinander getrennt. Diese weist eine Sollbruchlinie 86' auf, die beispielsweise als ringförmiger Einstich ausgebildet ist. Die Sollbruchlinie 86' umgrenzt eine Berstmembran 88'. Entsprechendes gilt für die Zwischenwand 84'' zwischen den Kammern 2'' und 2'''. Die Berstmembran hat dort das Bezugszeichen 88'' und die Sollbruchlinie das Bezugszeichen 86''. Die dem Gasauslaßkanal 18 zugewandte Kammer 2'ist über eine Schweißnaht 82 mit einem Auslöse- und Abschlußteil verbunden. Dieses Auslöse- und Abschlußteil ist im wesentlichen so bestückt, wie das Zentralloch in den vorangegangenen Ausführungsbeispielen. Es sind auch wiederum die gleichen Bezugszeichen verwendet worden, so daß sich eine detaillierte Beschreibung erübrigt.

Auch hier bilden wieder die Gasauslaßkanäle 18 und 37 gemeinsam mit dem Berstverschluß 20 und dem Raum der Gaszusammenführung 32 ein Mehrwegeventil. Das im Raum der Gaszusammenführung 32 erzeugte Hybridgas strömt über einen (nicht dargestellten) Rohrkrümmer in ein (ebenfalls nicht dargestelltes) Gaskissen.

Im Ruhezustand herrscht im Druckgasbehälter 2 überall gleicher Druck. Die Zwischenwände 84' und 84'' sind also keinerlei Druckbelastung ausgesetzt. Wird jedoch der Gasverschluß 20 aufgesprengt, fällt der Druck in der ersten Druckgaskammer 2' stark ab. Es baut sich also ein Druckdifferential zu beiden Seiten der Zwischenwand 84' auf. Hat dieses Druckdifferential einen vorgegebenen Berstdruck überschritten, bricht die Berstmembran 88' auf. Das in der zweiten Druckkammer 2' enthaltene Druckgas strömt nun aus. Daraufhin baut sich ein Druckdifferential zu beiden Seiten der zweiten Zwischenwand 84' auf, bis auch die dortige Berstmembran 88'' aufbricht.

Statt oder zusätzlich zu den Berstmembranen 88', 88'' können die Zwischenwände 84', 84'' auch (nicht dargestellte) Drosselöffnungen haben.

## Patentansprüche

1. Verfahren zum schnellen Aufblasen wenigstens eines Gaskissens (10) in einem Sicherheitssystem (1) vom Airbag-Typ, bei welchem
a) ein erstes Druckgas oder Druckgasgemisch in einem ersten Speicher und - davon abgeschirmt - in einem zweiten Speicher (26) ein im Bedarfsfall zündbarer Treibsatz (28) zur Erzeugung eines zweiten Treibgases gespeichert werden; und
b) im Bedarfsfall die beiden Gase aus ihren Speichern (2, 26) freigelassen und zusammengeführt werden und sodann das Gaskissen (10) aufblasen; dadurch gekennzeichnet, daß
c) der zeitliche Druckverlauf des zweiten Treibgases im Treibsatz-Speicher (26) durch Steuerung des Ausströmens des Treibgases aus dem Treibsatz-Speicher (26) gesteuert wird.

2. Verfahren nach Anspruch 1, dadurch gekennzeichnet, daß der Abfall der Hochdruckphase (HD) im Treibsatzspeicher (26) verzögert wird.

3. Verfahren nach Anspruch 2, dadurch gekennzeichnet, daß das Ausströmen des Treibsatzgases aus dem Treibsatz-Speicher (26) in Richtung möglichst gleichmäßiger Druckverhältnisse am Ort (32) der Zusammenführung der Füllgasströme gesteuert wird.

4. Verfahren nach einem der Ansprüche 1 bis 3, dadurch gekennzeichnet, daß auch das Ausströmen des ersten Druckgases gesteuert wird, insbesondere derart, daß das erste Druckgas stufenweise aus dem Druckgas-Speicher (2) ausströmt.

5. Verfahren nach einem der vorstehenden Ansprüche, dadurch gekennzeichnet, daß die Gase im wesentlichen erst außerhalb ihrer Speicher (2, 26) zusammengeführt werden.

6. Verfahren nach einem der Ansprüche 1 bis 5, dadurch gekennzeichnet, daß zur Abschirmung der Gase untereinander und nach außen ein wenigstens zwei Gasspeichern (2, 26) gemeinsamer Berstverschluß (20) verwendet wird.

7. Verfahren nach Anspruch 6, gekennzeichnet durch die Verwendung eines einstückigen oder mehrteiligen Berstverschlusses (20), dessen Teile (20', 20'') untereinander in formschlüssiger Verbindung stehen.

8. Verfahren nach einem der vorstehenden Ansprüche, dadurch gekennzeichnet, daß die beiden Gasströme derart gesteuert werden, daß sie am Ort (32) ihrer Zusammenführung gleichzeitig oder um ein kurzes Zeitintervall versetzt eintreffen.

9. Verfahren nach Anspruch 7, dadurch gekennzeichnet, daß zum Zusammenführen der Gasströme Mittel verwendet werden, deren Anordnung nach Art eines Mehrwege-Ventils, insbesondere 3-Wege-Ventils (18, 37, 32) erfolgt.

10. Sicherheitssystem (1) mit einem im Bedarfsfall schnell aufblasbaren Gaskissen (10) vom Airbag-Typ mit
a) einem zur Speicherung eines ersten Druckgases oder Druckgasgemisches ausgelegten ersten Druckbehälter (2) und einem zur Speicherung eines im Bedarfsfall zündbaren und danach ein Treibgas erzeugenden Treibsatzes (28) ausgelegten zweiten Druckbehälter (26); und
b) im Bedarfsfall freisprengbaren Gasauslässen (18, 20, 37) zum Freigeben und Zusammenführen der Gase sowie anschließenden Aufblasen des Gaskissens (10),
gekennzeichnet durch
c) Steuermittel zur Steuerung des Druckverlaufes (HD/ND) des Treibgases im Treibgasbehälter (26) und/oder zur Steuerung des Zeitintervalls (Δ t') zwischen dem Freisprengen der Gasauslässe (18, 20, 37) und dem Austritt des Treibgases aus dem Treibgasbehälter (26); wobei
d) die Steuermittel ein zwischen dem Treibsatz (28) und dem Ort des Gasaustrittes aus dem Treibsatzbehälter (26) angeordnetes Drosselelement (38) zur Steuerung des Ausströmens des Treibgases aufweisen.

11. Sicherheitssystem (1) nach Anspruch 10, dadurch gekennzeichnet, daß das Drosselelement (38) stationär angeordnet oder gegen einen freisprengbaren Verschluß (Berstverschluß 20) der Gasauslässe (18, 20, 37) beweglich geführt ist.

12. Sicherheitssystem (1) nach Anspruch 11, dadurch gekennzeichnet, daß das Drosselelement (38)
a) etwa die Form einer den Innenquerschnitt des Treibsatzbehälters (26) überspannenden Scheibe (39) - mit oder ohne hülsenartigem Aufsatz (50) auf der dem freisprengbaren Verschluß (20) zugeordneten Scheibenfläche - oder etwa die Form eines innen hohlen Kolbens (54, 56, 58) hat; und
b) wenigstens eine Drosselbohrung (40) in der Scheibe (39) oder in der Stirnfläche (54) und/oder in der Mantelfläche des Hohlkolbens (56) aufweist.

13. Sicherheitssystem (1) mit beweglich geführtem Drosselelement (38) nach Anspruch 11 oder 12, dadurch gekennzeichnet, daß
a) ein Endabschnitt (50, 54) des Drosselelementes (38) bereits in Ruhelage am freisprengbaren Verschluß (20) anliegt oder geringfügig davon beabstandet ist; und
b) der Hub des Drosselelementes (38) auf einen Wert begrenzt ist, der ein sicheres Aufbrechen des Verschlusses (20) gewährleistet.

14. Sicherheitssystem (1) mit dem Drosselelement (38) in Form der Scheibe (39) samt hülsenartigem Aufsatz (50) oder in Form des Hohlkolbens (54, 56, 58) nach Anspruch 13, gekennzeichnet durch eine Hubbegrenzung, derart, daß sich der Endabschnitt (50, 54) des Drosselelementes (38) nach vollendeter Hubbewegung außerhalb des Treibgasauslasses (37) befindet.

15. Sicherheitssystem (1) mit einer oder mehreren Drosselöffnung(en) (40) in der Mantelfläche (56) des hohlkolbenartigen Drosselelementes (38) nach den Ansprüchen 12 und 14, gekennzeichnet durch eine Hubbegrenzung und/oder Anordnung der Drosselöffnungen (40), derart, daß sich die Drosselöffnung(en) (40) nach vollendeter Hubbewegung außerhalb des Treibgasauslasses (37) befinden.

16. Sicherheitssystem (1) mit einem hohlkolbenartigen Drosselelement (38) nach einem der Ansprüche 10 bis 14, dadurch gekennzeichnet, daß das Drosselelement (38) derart im Treibgasauslaß (37) geführt ist, daß das Treibgas erst nach vollendeter Hubbewegung des Drosselelementes (38) durch einen engen Strömungskanal (65, 66, 67) zwischen der Mantelfläche (56) des Drosselelementes (38) und der Innenwandung des Treibgasauslasses (37) ausströmen kann.

17. Sicherheitssystem (1) nach einem der Ansprüche 10 bis 16, dadurch gekennzeichnet, daß die Gasauslässe (18, 20, 37) in einen außerhalb der Druckbehälter (2, 26) liegenden Raum (32) münden.

18. Sicherheitssystem (1) nach einem der Ansprüche 10 bis 17, dadurch gekennzeichnet, daß die Gasauslässe (18, 20, 37) wenigstens zweier Druckbehälter (2, 26) von einem gemeinsamen Berstverschluß (20) verschlossen sind.

19. Sicherheitssystem (1) nach Anspruch 18, dadurch gekennzeichnet, daß der Berstverschluß (20) einstückig ist oder mehrere, in formschlüssiger Verbindung befindliche Teile (20', 20'') aufweist.

20. Sicherheitssystem (1) nach Anspruch 19, dadurch gekennzeichnet, daß der außerhalb der Druckbehälter (2, 26) liegende Raum (32), die in ihn mündenden Gasauslässe (18, 37) und der Berstverschluß (20) nach Art eines Mehrwege-Ventils, insbesondere 3-Wege-Ventils (18, 37, 32) angeordnet sind.

21. Sicherheitssystem (1) nach einem der Ansprüche 18 bis 20, gekennzeichnet durch folgende Merkmale:
a) der Druckgasbehälter (2) ist im wesentlichen als ein Hohlring ausgestaltet;
b) der Treibgasbehälter (26) ist im wesentlichen topfartig ausgestaltet und in dem vom Druckgasbehälter (2) umgebenen Zentralloch angeordnet;
c) die Gasauslässe (18, 37) beider Behälter (2, 26) münden in den im Bereich des Zentralloches liegenden Außenraum (32), wobei der Treibgasauslaß (37) rohrstutzenartig vom Treibgasbehälter (26) absteht;
d) der Berstverschluß (20) weist ein die Treib- und Druck-Gasauslässe (18, 37) von außen her abdekkendes scheibenartiges Element auf;
e) das scheibenartige Element ist über eine erste umlaufende Sollbruchnaht (25) mit dem äußeren Rand des rohrstutzenartig (21) ausgebildeten Treibgasauslasses (37) und zusätzlich über eine zweite umlaufende Sollbruchnaht (22) mit der Außenwand des Druckgasbehälters (2) oder einem davon abstehenden Teil verbunden.

22. Sicherheitssystem (1) nach Anspruch 21, dadurch gekennzeichnet, daß das scheibenartige Element zwei sandwichartig aneinanderliegende Scheiben (20', 20'') aufweist, wobei die innere Scheibe (20') über die erste Sollbruchnaht (25) mit dem Treibgasauslaß (37) verbunden ist und die äußere Scheibe (20'') über die zweite Sollbruchnaht (22) mit der Außenwand oder einem daran gasdicht befestigten Teil des Druckgasbehälters (2) verbunden ist.

23. Sicherheitssystem (1) nach einem der Ansprüche 10 bis 22, insbesondere zur Durchführung des Verfahrens nach Anspruch 3, dadurch gekennzeichnet, daß der Druckgasbehälter (2) in wenigstens zwei Kammern (2', 2'') unterteilt ist.

24. Sicherheitssystem (1) nach Anspruch 23, dadurch gekennzeichnet, daß
a) die Kammern (2', 2'') strömungsmäßig hintereinander angeordnet und jeweils mittels einer eine Berstmembran (88', 88'') aufweisenden Zwischenwand (84', 84'') voneinander getrennt sind; und
b) die in Strömungsrichtung vorderste Kammer (2') den oder die Druckgasauslaß/-auslässe (18) aufweist.

25. Sicherheitssystem (1) nach einem der Ansprüche 10 bis 24, mit einer den Boden (12) des Treibsatzbehälters (26) durchgreifenden Treibsatz- und/oder Zündsatz-Halterung (14), dadurch gekennzeichnet, daß die Treib-/Zündsatz-Halterung (14) durch unterschiedliche Querschnittsformen und/oder eine Armierung gegen ein Herausdrücken aus dem Treibsatzbehälterboden gesichert ist.

26. Sicherheitssystem (1) nach Anspruch 25, dadurch gekennzeichnet, daß die Treib-/Zündsatz-Halterung (14) aus Kunststoff oder kunststoffartigem Material besteht und im Innern eine metallisch-harte Armierung, insbesondere eine gestanzte Metallscheibe (70) aufweist.

27. Sicherheitssystem (1) nach Anspruch 26, dadurch gekennzeichnet, daß der Außenrand der Metallscheibe(70) bündig mit der Außenfläche der Treib-/Zündsatzhalterung abschließt.

28. Sicherheitssystem (1) nach einem der Ansprüche 25 bis 27, mit die Treib-/Zündsatz-Halterung (14) durchgreifenden Zündpins (35), dadurch gekennzeichnet, daß die Zündpins (35) durch unterschiedliche Querschnittsformen (36) dagegen gesichert sind, daß sie nach Zündung des Treibsatzes (28) aus der Treib-/Zündsatzhalterung (14) herausgedrückt werden.

## Claims

1. A process for the rapid inflation of at least one airbag (10) in a safety system (1) of the airbag type, in which
a) a first pressurised gas or pressurised gas mixture is stored in a first reservoir and - screened therefrom - a propellant charge (28) which can be ignited if necessary for producing a second propellant gas is stored in a second reservoir (26); and
b) if necessary the two gases are released from their reservoirs (2, 26) and brought together and thereupon inflate the airbag (10);
characterised in that
c) the chronological course of the pressure of the second propellant gas in the propellant charge reservoir (26) is controlled by controlling the escape of the propellant gas from the propellant charge reservoir (26).

2. A process according to claim 1, characterised in that the drop of the high-pressure phase (HD) in the propellant charge reservoir (26) is delayed.

3. A process according to claim 2, characterised in that the escape of the propellant charge gas from the propellant charge reservoir (26) is controlled in the direction of pressure conditions which are as constant as possible at the location (32) of merging of the filling gas streams.

4. A process according to any one of claims 1 to 3, characterised in that the escape of the first pressurised gas is also controlled, particularly in such a way that the first pressurised gas escapes in stages from the pressurised gas reservoir (2).

5. A process according to any one of the preceding claims, characterised in that the gases are essentially first brought together outside their reservoirs (2, 26).

6. A process according to any one of claims 1 to 5, characterised in that a bursting seal (20) which is common to at least two gas reservoirs (2, 26) is used for screening the gases from each other and from the outside.

7. A process according to claim 6, characterised by the use of a one-piece or multi-piece bursting seal (20), the parts (20', 20'') of which are attached to each other with positive locking.

8. A process according to any one of the preceding claims, characterised in that the two gas streams are controlled in such a way that they arrive at their location (32) of merging simultaneously or staggered by a short time interval.

9. A process according to claim 7, characterised in that means are used for bringing the gas streams together, the arrangement of which is effected in the manner of a multi-way valve, particularly a 3-way valve (18, 37, 32).

10. A safety system (1) of the airbag type, with an airbag (10) which can be rapidly inflated if necessary, having
a) a first pressure vessel (2) designed for storing a first pressurised gas or pressurised gas mixture and a second pressure vessel (26) designed for storing a propellant charge (28) which can be ignited if necessary and which thereafter produces a propellant gas:
b) gas outlets (18, 20, 37) which can break open if necessary for releasing and bringing together the gases and for the subsequent inflation of the airbag (10),
c) control means for controlling the course of the pressure (HD/ND) of the propellant gas in the propellant gas vessel (26) and/or for controlling the time interval (Δt') between the breaking open of the gas outlets (18, 20, 37) and the outflow of the propellant gas from the propellant gas vessel (26); wherein
d) the control means comprise a throttle element (38), disposed between the propellant charge (28) and the location of the gas outflow from the propellant gas vessel (26), for controlling the escape of the propellant gas.

11. A safety system (1) according to claim 10, characterised in that the throttle element (38) is disposed fixed or is movably guided towards a breakable seal (bursting seal 20) of the gas outlets (18, 20, 37).

12. A safety system (1) according to claim 11, characterised in that the throttle element (38)
a) has approximately the form of a disc (39) spanning the internal cross-section of the propellant charge vessel (26) - with or without a sleeve-like projection (50) on the disc face associated with the breakable seal (20) - or has approximately the form of a piston (54, 56, 58) which is hollow inside; and
b) has at least one throttle bore (40) in the disc (39) or in the end face (54) and/or in the curved surface of the hollow piston (56).

13. A safety system (1) having a movably guided throttle element (38) according to claim 11 or 12, characterised in that
a) in the inoperative position an end section (50, 54) of the throttle element (38) is already seated against the breakable seal (20) or is at a slight distance therefrom; and
b) the stroke of the throttle element (38) is restricted to a value which ensures the reliable breaking open of the seal (20).

14. A safety system (1) having the throttle element (38) in the form of the disc (39) together with the sleeve-like projection (50) or in the form of the hollow piston (54, 56, 58) according to claim 13, characterised by a restriction of its stroke so that the end section (50, 54) of the throttle element (38) is situated outside the propellant gas outlet (37) after completion of the stroke movement.

15. A safety system (1) having one or more throttle apertures (40) in the curved surface (56) of the hollow piston-like throttle element (38) according to claims 12 and 14, characterised by a stroke restriction and/or an arrangement of the throttle apertures (40) so that the throttle aperture(s) (40) is/are situated outside the propellant gas outlet (37) after the completion of the stroke movement.

16. A safety system (1) having a hollow piston-like throttle element (38) according to any one of claims 10 to 14, characterised in that the throttle element (38) is guided in the propellant gas outlet (37) in such a way that the propellant gas can first escape after the completion of the stroke movement of the throttle element (38), through a narrow flow channel (65, 66, 67) between the curved surface (56) of the throttle element (38) and the inner wall of the propellant gas outlet (37).

17. A safety system (1) according to any one of claims 10 to 16, characterised in that the gas outlets (18, 20, 37) lead into a space (32) situated outside the pressure vessels (2, 26).

18. A safety system (1) according to any one of claims 10 to 17, characterised in that the gas outlets (18, 20, 37) of at least two pressure vessels (2, 26) are sealed by a common bursting seal (20).

19. A safety system (1) according to claim 18, characterised in that the bursting seal (20) is in one piece or comprises a plurality of parts (20,', 20'') attached with positive locking.

20. A safety system (1) according to claim 19, characterised in that the space (32) situated outside the pressure vessels (2, 26), the gas outlets (18, 37) leading into the said space and the bursting seal (20) are arranged in the manner of a multi-way valve, particularly a 3-way valve (18, 37, 32).

21. A safety system (1) according to any one of claims 18 to 20, characterised by the following features:
a) the pressurised gas vessel (2) is essentially fashioned as a hollow ring;
b) the propellant gas vessel (26) is essentially fashioned in the form of a pot and is disposed in the central hole surrounded by the pressurised gas vessel (2);
c) the gas outlets (18, 37) of both vessels (2, 26) lead into the exterior space (32) situated in the region of the central hole, wherein the propellant gas outlet (37) protrudes in the manner of a pipe socket from the pressurised gas vessel (26);
d) the bursting seal (20) comprises a disc-like element covering the propellant-and pressurised gas outlets (18, 37) from the outside;
e) the disc-like element is attached via a first, encircling break-off joint (25) to the outer edge of the propellant gas outlet (37) constructed in the manner of a pipe socket (21), and is additionally attached via a second encircling break-off joint (22) to the outer wall of the pressurised gas vessel (2) or to a part projecting therefrom.

22. A safety system (1) according to claim 21, characterised in that the disc-like element comprises two discs (20', 20'') seated against each other in the manner of a sandwich, wherein the inner disc (20') is attached via the first break-off joint (25) to the propellant gas outlet (37) and the outer disc (20'') is attached via the second break-off joint (22) to the outer wall of the pressurised gas vessel (2) or to a part which is fixed thereto in a gas-tight manner.

23. A safety system (1) according to any one of claims 10 to 22, particularly for carrying out the process according to claim 3, characterised in that the pressurised gas vessel (3) is subdivided into at least two chambers (2', 2'').

24. A safety system (1) according to claim 23, characterised in that
a) the chambers (2', 2'') are disposed one behind another as regards flow and are separated from one another in each case by a partition wall (84', 84'') having a bursting seal (88', 88''); and
b) the frontmost chamber (2') in the direction of flow comprises the pressurised gas outlet/outlets (18).

25. A safety system (1) according to any one of claims 10 to 24, having a propellant charge and/or igniter charge holder (14) penetrating the base (12) of the propellant charge vessel (26), characterised in that the propellant/igniter charge holder (14) is secured against being pushed out of the propellant charge vessel base by different cross-sectional shapes and/or by a reinforcement.

26. A safety system (1) according to claim 25, characterised in that the propellant/igniter charge holder (14) consists of plastic or plastic-like material and has a reinforcement of metallic hardness inside it, particularly a punched metal disc (70).

27. A safety system (1) according to claim 26, characterised in that the outer edge of the metal disc (70) terminates flush with the outer surface of the propellant/igniter charge holder.

28. A safety system (1) according to any one of claims 25 to 27, with a firing pin (35) penetrating the propellant/igniter charge holder (14), characterised in that the firing pin (35) is secured against being pushed out of the propellant/igniter charge holder (14) after ignition of the propellant charge (28) by different cross-sectional shapes (36).

## Revendications

1. Procédé pour gonfler rapidement au moins un coussin pneumatique (10) dans un système de sécurité (1) du type airbag, selon lequel
a) un premier gaz comprimé ou mélange de gaz comprimés est stocké dans un accumulateur et un ensemble propulseur (28) pouvant être amorcé en cas de besoin et servant à produire un second gaz propulseur est stocké dans un second accumulateur (26) - séparément du premier accumulateur -; et
b) en cas de besoin, les deux gaz sont libérés de leurs accumulateurs (2,26) et sont rassemblés et gonflent alors le coussin pneumatique (10);
caractérisé par le fait que
c) la variation dans le temps de la pression du second gaz propulseur dans l'accumulateur (26) de l'ensemble propulseur est commandée par la commande de l'éjection du gaz propulseur hors de l'accumulateur (26) de l'ensemble propulseur.

2. Procédé suivant la revendication 1, caractérisé par le fait que la diminution de la phase à haute pression (HD) dans l'accumulateur (26) de l'ensemble propulseur est retardée.

3. Procédé suivant la revendication 2, caractérisé en ce que l'éjection du gaz de l'ensemble propulseur hors de l'accumulateur (26) de l'ensemble propulseur est commandée pour l'obtention de conditions de pression aussi uniformes que possible à l'emplacement (32) de la réunion des courants de gaz de remplissage.

4. Procédé suivant l'une des revendications 1 à 3, caractérisé par le fait que l'éjection du premier gaz comprimé est également commandée, notamment de telle sorte que le premier gaz comprimé sort d'une manière progressive de l'accumulateur (2) du gaz comprimé.

5. Procédé suivant l'une des revendications précédentes, caractérisé par le fait que les gaz sont rassemblés essentiellement seulement à l'extérieur de leurs accumulateurs (2,26).

6. Procédé suivant l'une des revendications 1 à 5, caractérisé par le fait que pour séparer les gaz l'un de l'autre et vis-à-vis de l'extérieur, on utilise un dispositif de fermeture (20) pouvant se rompre par éclatement, commun à au moins deux accumulateurs de gaz (2,26).

7. Procédé suivant la revendication 6, caractérisé par l'utilisation d'un dispositif de fermeture (20) pouvant se rompre par éclatement, formé d'un seul tenant ou de plusieurs éléments et dont les éléments (20',20'') sont reliés entre eux selon une liaison par formes complémentaires.

8. Procédé suivant l'une des revendications précédentes, caractérisé par le fait que les deux courants de gaz sont commandés de telle sorte qu'ils arrivent simultanément ou en étant décalés d'un faible intervalle de temps à l'emplacement (32), où ils se réunissent.

9. Procédé suivant la revendication 7, caractérisé par le fait que pour la réunion des courants de gaz, on utilise des moyens, dont l'agencement correspond à une soupape à plusieurs voies, notamment une soupape à 3 voies (18,37,32).

10. Système de sécurité (1) comportant un coussin pneumatique (10) du type airbag, pouvant être gonflé rapidement en cas de besoin, et possédant
a) un premier réservoir de sous-pression (2) conçu pour stocker un premier gaz comprimé ou un mélange gazeux comprimé, et un second réservoir sous pression (26), conçu pour stocker un ensemble propulseur (28) pouvant être amorcé en cas de besoin et produisant ensuite un gaz propulseur;
b) des sorties (18,20,37) pour le gaz, qui peuvent en cas de besoin être libérées par éclatement, pour libérer et rassembler les gaz et gonfler ensuite le coussin pneumatique (10),
caractérisé par
c) des moyens de commande servant à commander la variation de pression (HD/ND) du gaz propulseur dans le réservoir (26) du gaz propulseur et/ou commander l'intervalle de temps (Δt') entre la libération par éclatement des sorties de gaz (18,20,37) et la sortie du gaz propulseur hors du réservoir (26) du gaz propulseur;
d) les moyens de commande comportant un élément d'étranglement (38) qui est disposé entre l'ensemble propulseur (28) et l'emplacement de sortie du gaz hors du réservoir (26) du gaz propulseur, pour la commande de l'éjection du gaz propulseur.

11. Système de sécurité (1) suivant la revendication 10, caractérisé par le fait que l'élément d'étranglement (38) est monté fixe ou est guidé en déplacement contre le dispositif de fermeture pouvant être libéré par éclatement (dispositif de fermeture (20) pouvant se rompre par éclatement) des sorties (18,20,37) pour le gaz.

12. Système de sécurité (1) suivant la revendication 11, caractérisé par le fait que l'élément d'étranglement (38)
a) possède approximativement la forme d'un disque (39), qui couvre la section transversale intérieure du réservoir (36) de l'ensemble propulseur - avec ou sans embout saillant (50) en forme de chapeau sur la surface du disque tournée vers le dispositif de fermeture (20) pouvant être libéré par éclatement - ou approximativement la forme d'un piston évidé intérieurement (54,56,58); et
b) possède au moins un perçage d'étranglement (40) aménagé dans le disque (39) ou dans la surface frontale (54) et/ou dans la surface enveloppe du piston creux (56).

13. Système de sécurité (1) comportant un élément d'étranglement (38) guidé en déplacement suivant la revendication 11 ou 12, caractérisé par le fait que
a) une partie d'extrémité (50,54) de l'élément d'étranglement (38) s'applique, déjà dans la position de repos, contre le dispositif de fermeture (20) pouvant être libéré par éclatement ou en est légèrement écarté, et
b) la course de l'élément d'étranglement (38) est limitée à une valeur qui garantit une rupture sûre du dispositif de fermeture (20).

14. Système de sécurité (1) comportant l'élément d'étranglement (38) sous la forme du disque (39) ainsi que l'embout saillant en forme de chapeau (50), ou sous la forme du piston creux (54,56,58) suivant la revendication 13, caractérisé par une limitation telle de la course que la partie d'extrémité (50,54) de l'élément d'étranglement (38) est située à l'extérieur de la sortie (37) pour le gaz propulseur, au bout du déplacement sur la course complète.

15. Système de sécurité (1) comportant une ou plusieurs ouvertures d'étranglement (40) ménagées dans la surface enveloppe (56) de l'élément d'étranglement (38) en forme de piston creux suivant les revendications 12 et 14, caractérisé par une limitation telle de la course et/ou une disposition telle des ouvertures d'étranglement (40) que la ou les ouvertures d'étranglement (40) sont situées à l'extérieur de la sortie (37) pour le gaz propulseur, après le déplacement sur la course complète.

16. Système de sécurité (1) comportant un élément d'étranglement (38) en forme de piston creux suivant l'une des revendications 10 à 14, caractérisé par le fait que l'élément d'étranglement (38) est guidé dans la sortie (37) pour le gaz propulseur de telle sorte que c'est seulement après un déplacement de l'élément d'étranglement (38) sur sa course complète, que le gaz propulseur peut sortir par un étroit canal d'écoulement (65,66,67) entre la surface enveloppe (56) de l'élément d'étranglement (38) et la paroi intérieure de la sortie (37) du gaz propulseur.

17. Système de sécurité (1) suivant l'une des revendications 10 à 16, caractérisé par le fait que les sorties (18,20,37) pour le gaz débouchent dans un espace (32) situé à l'extérieur des réservoirs sous pression (2,26).

18. Système de sécurité (1) suivant l'une des revendications 10 à 17, caractérisé par le fait que les sorties (18,20,37) pour les gaz d'au moins deux réservoirs sous pression (2,26) sont fermées par un dispositif de fermeture commun (20) pouvant se rompre par éclatement.

19. Système de sécurité (1) suivant la revendication 18, caractérisé par le fait que le dispositif de fermeture (20) pouvant se rompre par éclatement est formé d'un seul tenant ou comporte plusieurs éléments (20',20'') réunis selon une liaison par formes complémentaires.

20. Système de sécurité (1) suivant la revendication 19, caractérisé par le fait que l'espace (32), situé à l'extérieur des réservoirs sous pression (2,26), les sorties (18,37) pour les gaz, qui débouchent dans cet espace, et le dispositif de fermeture (20) pouvant se rompre par éclatement sont disposés à la manière d'une soupape à plusieurs voies, notamment d'une soupape à 3 voies (18,37,32).

21. Système de sécurité (1) suivant l'une des revendications 18 à 20, caractérisé par les caractéristiques suivantes :
a) le réservoir de gaz comprimé (2) est agencé essentiellement sous la forme d'un anneau creux;
b) le réservoir (26) pour le gaz propulseur est agencé essentiellement en forme de pot et est disposé dans le trou central entouré par le réservoir (2) pour le gaz comprimé;
c) les sorties (18,37) pour les gaz des deux réservoirs (2, 26) débouchent dans l'espace extérieur (32) au niveau du trou central, la sortie (37) pour le gaz propulseur faisant saillie à la manière d'un embout tubulaire hors du réservoir (26) pour le gaz propulseur;
d) le dispositif de fermeture (20) pouvant se rompre par éclatement possède un élément en forme de disque, qui recouvre de l'extérieur les sorties (18,37) pour le gaz propulseur et le gaz comprimé;
e) l'élément en forme de disque est relié, par l'intermédiaire d'une première ligne circonférentielle de rupture de consigne (25) au bord extérieur de la sortie (37) pour le gaz propulseur, qui est agencée sous la forme d'un embout tubulaire (21), et en outre, par l'intermédiaire d'une seconde ligne circonférentielle de rupture de consigne (22), à la paroi extérieure du réservoir (2) pour le gaz comprimé ou à une partie qui fait saillie sur cette paroi.

22. Système de sécurité (1) suivant la revendication 21, caractérisé par le fait que l'élément en forme de disque comporte deux disques (20',20'') qui sont appliqués l'un contre l'autre selon une disposition en sandwich, le disque intérieur (20') étant relié à la sortie (37) pour le gaz propulseur par l'intermédiaire de la première ligne de rupture de consigne (25), tandis que le disque extérieur (25) est relié par l'intermédiaire de la seconde ligne de rupture de consigne (22) à la paroi extérieure ou à une partie, fixée d'une manière étanche au gaz à cette paroi, du réservoir (2) pour le gaz comprimé.

23. Système de sécurité (1) suivant l'une des revendications 10 à 22, notamment pour la mise en oeuvre du procédé suivant la revendication 3, caractérisé par le fait que le réservoir (2) pour le gaz comprimé est subdivisé en au moins deux chambres (2',2'').

24. Système de sécurité (1) suivant la revendication 23, caractérisé par le fait que
a) les chambres (2',2'') sont disposées l'une derrière l'autre dans le sens de l'écoulement et sont séparées l'une de l'autre respectivement au moyen d'une paroi intermédiaire (84',84'') qui possède une membrane pouvant se rompre par éclatement (88',88''); et
b) la chambre (2'), qui est en amont dans la direction de l'écoulement, comporte la ou les sorties (18) pour le gaz comprimé.

25. Système de sécurité (1) suivant l'une des revendications 10 à 24, comportant un dispositif de fixation (14) pour l'ensemble propulseur et/ou l'ensemble d'amorçage, qui traverse le fond (12) du réservoir (26) de l'ensemble propulseur, caractérisé par le fait que le dispositif (14) de fixation de l'ensemble propulseur/l'ensemble d'amorçage est protégé par différentes formes en coupe transversale et/ou une armature, vis-à-vis d'une extraction à partir du fond du réservoir de l'ensemble propulseur.

26. Système de sécurité (1) suivant la revendication 25, caractérisé par le fait que le dispositif (14) de fixation de l'ensemble propulseur/l'ensemble propulseur est réalisé en une matière plastique ou en un matériau analogue à une matière plastique et comporte, en son intérieur, une armature possédant la dureté d'un métal, notamment un disque métallique découpé (70).

27. Système de sécurité (1) suivant la revendication 26, caractérisé par le fait que la paroi extérieure du disque métallique (70) se termine de niveau avec la surface extérieure du dispositif de fixation de l'ensemble propulseur/de l'ensemble d'amorçage.

28. Système de sécurité (1) suivant l'une des revendications 25 à 27, comportant des percuteurs (35) qui traversent le dispositif (14) de fixation de l'ensemble propulseur/l'ensemble d'amorçage, caractérisé par le fait que les percuteurs (35) sont protégés, grâce à des formes différentes en coupe transversale (36), vis-à-vis d'une éjection après l'amorçage de l'ensemble propulseur (28) hors du dispositif (14) de fixation de l'ensemble propulseur/l'ensemble d'amorçage.
